# EUROPEAN PATENT SPECIFICATION

(11) **EP 3 335 516 B1**
(45) Date of publication and mention of the grant of the patent: **17.03.2021**
(21) Application number: 16757740.2
(22) Date of filing: 15.08.2016
(51) Int. Cl.: H04W 74/08

(54) **LISTEN-BEFORE-TALK WITH ADAPTIVE POST-BACKOFF WAIT TIME**
TRÄGERPRÜFUNG MIT ADAPTIVER WARTEZEIT NACH BACKOFF
ÉCOUTE AVANT TRANSMISSION AVEC DÉLAY POST-RÉGRESSION ADAPTIF

(30) Priority: 14.08.2015 US 201562205209 P
(43) Date of publication of application: 20.06.2018
(73) Proprietor: Telefonaktiebolaget LM Ericsson (PUBL), 164 83 Stockholm (SE)
(72) Inventor: KOORAPATY, Havish, Saratoga, California 95070 (US); MUKHERJEE, Amitav, Fremont, California 94538 (US); CHENG, Jung-Fu, Fremont, California 94539 (US); KARAKI, Reem, 52074 Aachen (DE); FALAHATI, Sorour, 112 29 Stockholm (SE); KANG, Du Ho, SE-194 66 Upplands Väsby (SE); LARSSON, Daniel, 112 18 Stockholm (SE)
(74) Representative: Zacco Sweden AB
(86) International application number: PCT/SE2016/050757
(87) International publication number: WO 2017/030491

(56) References cited:
- WO-A1-2013/126858
- WO-A1-2014/110513
- US-B1- 6 813 260

## Description

### Technical field

The present disclosure pertains to accessing carriers, in particular one or more unlicensed carriers, utilising LBT, in particular in the context of wireless communication utilizing multi-carrier techniques like LAA.

### Background

Unlicensed spectrum, currently mainly used for Wifi, is becoming interesting for mobile telecommunication to extend the available spectrum. Combining telecommunications technology, e.g. LTE, with the requirements to access unlicensed spectrum and to uphold fairness for all users thereof, provides new challenges. This is particularly true in the context of using multi-carrier approaches like License-Assisted Access (LAA).

D1 (WO2014/110513 A1) discloses systems and methods for modifying carrier sense multiple access (CSMA) for dense networks.

D2 (US6813260 B1) discloses systems and methods for prioritized access in a contention-based network. D3 (WO2013/126858 A1) discloses a random access in dynamic and shared spectrums.

### Summary

The invention is defined by the independent claims. Furthermore, the embodiments of the invention are those defined by the claims.

It is an object of the present disclosure to provide approaches facilitating improved managing of transmitting on carriers utilising Listen-Before-Talk procedure, in particular unlicensed carriers.

There is proposed a radio node for a wireless communication network. The radio node is adapted for transmitting, based on a Listen-Before-Talk, LBT, procedure, on at least one carrier when and/or after reaching a wait time, wherein the wait time is determined based on one or more operational conditions and/or parameters. The wait time accordingly allows to take into account conditions and/or parameters besides a prescribed back-off time as commonly required in the context of LBT procedures.

The radio node may be adapted for multi-carrier operation and/or carrier aggregation, CA, pertaining to the at least one carrier. The wait time may be particularly useful in managing access to carriers in such a scenario, in particular if the carriers are closely spaced in frequency, to provide improved handling of energy leakage between carriers, which may otherwise mislead the LBT procedure.

It may be considered that the radio node may be adapted for Licensed Assisted Access, LAA, with the at least one carrier being a carrier of a Secondary Cell, SCell. Taking into account the operational conditions for a SCell may help avoiding undesired interference and/or underuse of carriers in the aggregation.

Generally, performing a LBT procedure may comprise determining the wait time and/or withholding transmitting until the wait time is reached. The wait time may thus be utilised and/or be integrated in the LBT procedure, which accordingly gets more flexible and adaptable.

The LBT procedure may in general comprise performing a random backoff and/or may be based on a random backoff number, wherein the wait time may be determined to be later than and/or after the time associated with performing the random backoff. By withholding transmission even beyond the backoff time, in particular in multi-carrier scenarios or in heavy traffic situations, managing individual carriers may be improved.

It may be considered that an operational parameter indicates a combination of a number of unlicensed carriers (respectively, carriers subject to a LBT procedure before transmitting) used, and/or traffic load, and/or Quality of Service class, and/or interference conditions. With the suggested wait time, transmission (carrier access) may be dynamically adapted to such parameters and conditions.

Moreover, a method for operating a radio node in a wireless communication network is described. The method comprises transmitting, based on a Listen-Before-Talk, LBT, procedure, on at least one carrier when and/or after reaching a wait time, wherein the wait time is determined based on one or more operational conditions and/or parameters.

The method may comprise multi-carrier operation and/or carrier aggregation, CA, pertaining to the at least one carrier. In particular, transmitting may be on a carrier aggregate including the at least one carrier.

It may be considered that transmitting comprises performing Licensed Assisted Access, LAA, with the at least one carrier being a carrier of a Secondary Cell, SCell.

Specifically, the LBT procedure may comprise determining the wait time and/or withholding transmitting until the wait time is reached.

In some variants, the LBT procedure comprises performing a random backoff and/or is based on a random backoff number, wherein the wait time may be determined to be later and/or after the time associated with performing the random backoff.

An operational parameter may be considered to indicate a combination of a number of unlicensed carriers used, and/or traffic load, and/or Quality of Service class, and/or interference conditions.

There is also proposed a program product comprising instructions, the instructions causing control circuitry to perform and/or control any one of, or any combination of, the methods described herein.

A storage medium storing a program product as described herein and/or instructions may be considered, the instructions causing control circuitry to perform and/or control any one of, or any combination of, the methods described herein.

### Brief description of the figures

In the figures, there are shown examples of structures, devices and methods for illustrative purposes. In particular, there are shown in:
Figure 1, an LTE downlink physical resource;
Figure 2, an LTE time-domain structure;
Figure 3, a normal downlink subframe;
Figure 4, an example of carrier aggregation;
Figure 5, an illustration of Listen-Before-Talk (LBT) in Wi-Fi;
Figure 6, an illustration of Listen-Before-Talk (LBT) in EN 301.893;
Figure 7, a CA-capable UE (User Equipment) configured with one LAA SCell;
Figure 8, licensed-assisted access (LAA) to unlicensed spectrum using LTE carrier aggregation and Listen-Before-Talk to ensure good coexistence with other unlicensed band technologies;
Figure 9 issues with existing solution of channel access for multi-carrier operation on unlicensed carrier with immediate transmission after random backoff;
Figure 10 post-backoff wait time with maximum wait limit in MRBC scenario;
Figure 11 early multi-carrier transmission before end of a maximum wait time;
Figure 12 an example of post-backoff wait time with a single random backoff channel and two ancillary carriers;
Figure 13 an example of dynamic selection of SRBC based on earliest completion of random backoff procedure across multiple carriers;
Figure 14 an example of fast adaptive post-backoff wait time with maximum wait limit in MRBC scenario;
Figure 15 an adaptive post-backoff wait time with maximum wait limit in dynamic SRBC scenario;
Figure 16 an example of post back-off wait time with transmission on two carriers before the maximum wait time is expired;
Figure 17 an example of post-back-off wait time with transmission on one of the two carriers after expiring the maximum wait time;
Figure 18 post-back-off wait time with transmission on two carriers by updating the maximum wait time with Δw, using the second completed random backoff as the reference point for the new updated maximum wait time expiring;
Figure 19 an example of post-back-off wait time with transmission on two carriers by updating the maximum wait time with Δw based on criteria such as estimate of remaining backoff;
Figure 20 an example of a terminal or user equipment (terminal and user equipment may be used interchangeably;
Figure 21 an example of a network node or base station, in particular an eNodeB.

### Detailed description

The 3GPP initiative "License Assisted Access" (LAA) intends to allow LTE equipment to also operate in the unlicensed 5 GHz radio spectrum. The unlicensed 5 GHz spectrum may be used as a complement to the licensed spectrum. Accordingly, devices may connect in the licensed spectrum (using a primary cell or PCell) and use carrier aggregation to benefit from additional transmission capacity in the unlicensed spectrum (e.g., via a secondary cell or SCell).

To reduce the changes required for aggregating licensed and unlicensed spectrum, the LTE frame timing in the primary cell may be used or maintained simultaneously used in the secondary cell, and/or the secondary cell may be synchronized to the primary cell, and/or the timing for the primary cell may be used for and/or be the basis for the secondary cell.

Regulatory requirements, however, may not permit transmissions in the unlicensed spectrum without prior channel sensing. Since the unlicensed spectrum must be shared with other radios of similar or dissimilar wireless technologies, a so called listen-before-talk (LBT) method needs to be applied. Today, the unlicensed 5 GHz spectrum is mainly used by equipment implementing the IEEE 802.11 Wireless Local Area Network (WLAN) standard. This standard is known under its marketing brand "Wi-Fi."

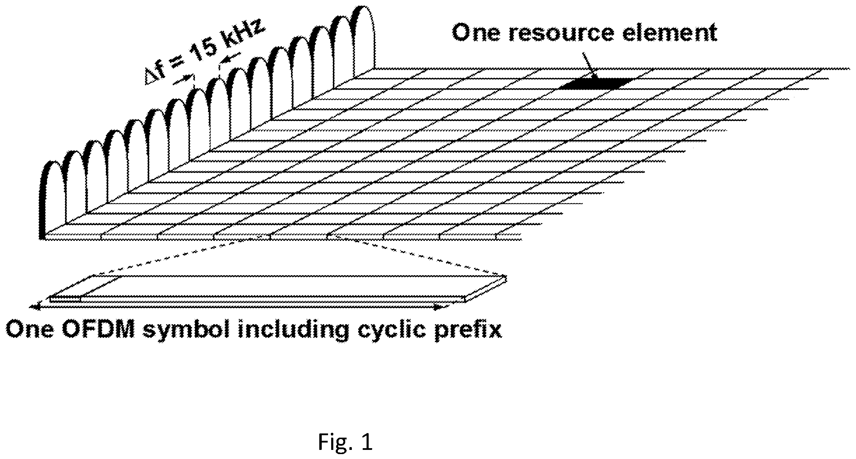

Both Wi-Fi and LAA may operate in multi-carrier mode with simultaneous transmission across multiple unlicensed channels in the 5 GHz band. Wi-Fi follows a hierarchical multi-carrier LBT scheme known as channel bonding. LTE (Long Term Evolution) uses OFDM in the downlink and DFT-spread OFDM (also referred to as single-carrier FDMA) in the uplink. The basic LTE downlink physical resource can be seen as a time-frequency grid as illustrated in Figure 1, where each resource element corresponds to one OFDM subcarrier during one OFDM symbol interval. The uplink subframe has the same subcarrier spacing as the downlink and the same number of SC-FDMA symbols in the time domain as OFDM symbols in the downlink.

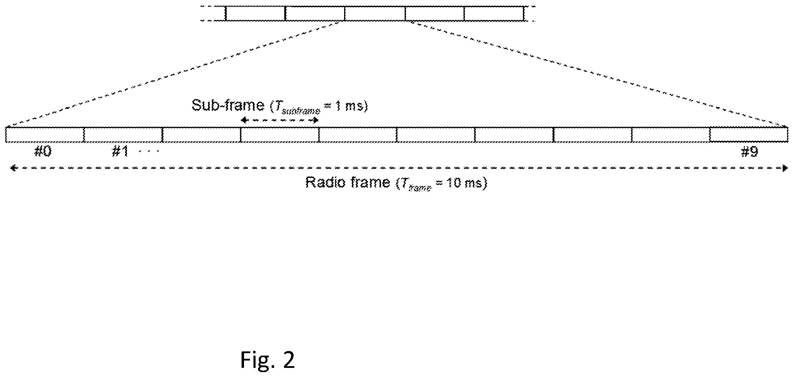

In the time domain, LTE downlink transmissions are organized into radio frames of 10 ms, each radio frame consisting of ten equally-sized subframes of length Tsubframe = 1 ms as shown in Figure 2. For normal cyclic prefix, one subframe consists of 14 OFDM symbols. The duration of each symbol is approximately 71.4 µs.

Furthermore, the resource allocation in LTE is typically described in terms of resource blocks, where a resource block corresponds to one slot (0.5 ms) in the time domain and 12 contiguous subcarriers in the frequency domain. A pair of two adjacent resource blocks in time direction (1.0 ms) is known as a resource block pair. Resource blocks are numbered in the frequency domain, starting with 0 from one end of the system bandwidth. It should be noted that a subcarrier (as a subdivision of a carrier structure of LTE) may be seen as a form of carrier in the context of LBT, in particular if a LBT/CCA procedure is performed for the subcarrier, e.g. specifically for the subcarrier and/or only for the subcarrier.

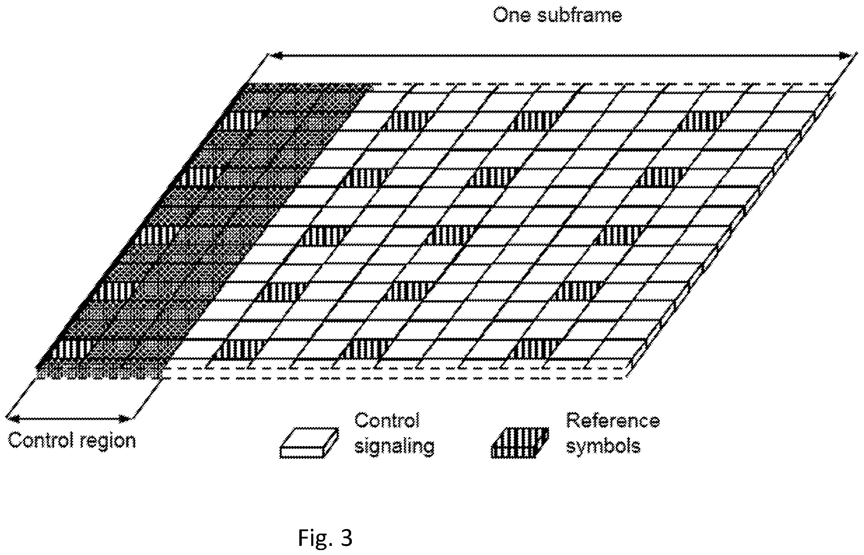

Downlink transmissions are dynamically scheduled, i.e., in each subframe the base station transmits control information about which terminals data is transmitted to and upon which resource blocks the data is transmitted, in the current downlink subframe. This control signaling is typically transmitted in the first 1, 2, 3 or 4 OFDM symbols in each subframe and the number n = 1, 2, 3 or 4 is known as the Control Format Indicator (CFI). The downlink subframe also contains common reference symbols, which are known to the receiver and used for coherent demodulation of e.g. the control information. A downlink system with CFI = 3 OFDM symbols as control is illustrated in Figure 3.

From LTE Rel-11 onwards, above described resource assignments can also be scheduled on the enhanced Physical Downlink Control Channel (EPDCCH). For Rel-8 to Rel-10 only the Physical Downlink Control Channel (PDCCH) is available.
The reference symbols shown in the above-mentioned Figure 3 are cell specific reference symbols (CRS) and are used to support multiple functions including fine time and frequency synchronization and channel estimation for certain transmission modes.

Physical Downlink Control Channel (PDCCH) and Enhanced PDCCH (EPDCCH) are discussed in the following.

The PDCCH/EPDCCH is used to carry downlink control information (DCI) such as scheduling decisions and power-control commands. More specifically, the DCI may include any one or any combination of:
- Downlink scheduling assignments, including PDSCH resource indication, transport format, hybrid-ARQ information, and control information related to spatial multiplexing (if applicable). A downlink scheduling assignment may also include a command for power control of the PUCCH used for transmission of hybrid-ARQ acknowledgements in response to downlink scheduling assignments.
- Uplink scheduling grants, including PUSCH resource indication, transport format, and hybrid-ARQ-related information. An uplink scheduling grant may also include a command for power control of the PUSCH.
- Power-control command/s for a set of terminals as a complement to the commands included in the scheduling assignments/grants.
One PDCCH/EPDCCH carries one DCI message containing one of the groups of information listed above. As multiple terminals can be scheduled simultaneously, and each terminal can be scheduled on both downlink and uplink simultaneously, there must be a possibility to transmit multiple scheduling messages within each subframe. Each scheduling message is transmitted on separate PDCCH/EPDCCH resources, and consequently there are typically multiple simultaneous PDCCH/EPDCCH transmissions within each subframe in each cell. Furthermore, to support different radio-channel conditions, link adaptation can be used, where the code rate of the PDCCH/EPDCCH is selected by adapting the resource usage for the PDCCH/EPDCCH, to match the radio-channel conditions.

Carrier aggregation is described in the following.

The LTE Rel-10 standard supports bandwidths larger than 20 MHz. One important requirement on LTE Rel-10 is to assure backward compatibility with LTE Rel-8. This should also include spectrum compatibility. That would imply that an LTE Rel-10 carrier, wider than 20 MHz, should appear as a number of LTE carriers to an LTE Rel-8 terminal. Each such carrier can be referred to as a Component Carrier (CC). In particular for early LTE Rel-10 deployments, it can be expected that there will be a smaller number of LTE Rel-10-capable terminals compared to many LTE legacy terminals. An efficient use of a wide carrier is desirable also for legacy terminals, i.e. that it is possible to implement carriers where legacy terminals can be scheduled in all parts of the wideband LTE Rel-10 carrier.

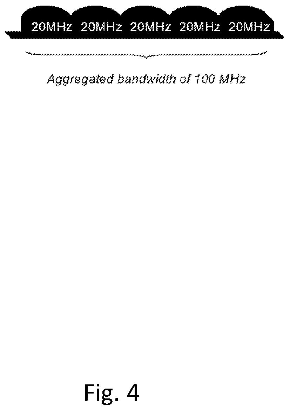

A way to obtain this would be by means of Carrier Aggregation (CA). CA implies that an LTE Rel-10 terminal can receive multiple CCs, where the CC have, or at least the possibility to have, the same structure as a Rel-8 carrier. CA is illustrated in Figure 4.

A CA-capable UE/radio node may be assigned (and/or determined or define, in particular if the radio node is a base station) a primary cell (PCell) which may be always or continuously activated (as long as the aggregate is activated/provided), and one or more secondary cells (SCells) which may be activated or deactivated dynamically.

The number of aggregated CC as well as the bandwidth of the individual CC may be different for uplink and downlink. A symmetric configuration refers to the case where the number of CCs in downlink and uplink is the same whereas an asymmetric configuration refers to the case that the number of CCs is different. It is important to note that the number of CCs configured in a cell may be different from the number of CCs seen by a terminal: A terminal may for example support more downlink CCs than uplink CCs, even though the cell is configured with the same number of uplink and downlink CCs.

In addition, a carrier aggregation may include the ability to perform cross-carrier scheduling. This mechanism allows a (E)PDCCH on one CC to schedule data transmissions on another CC by means of a 3-bit Carrier Indicator Field (CIF) inserted at the beginning of the (E)PDCCH messages. For data transmissions on a given CC, a UE expects to receive scheduling messages on the (E)PDCCH on just one CC - either the same CC, or a different CC via cross-carrier scheduling; this mapping from (E)PDCCH to PDSCH is also configured semi-statically.

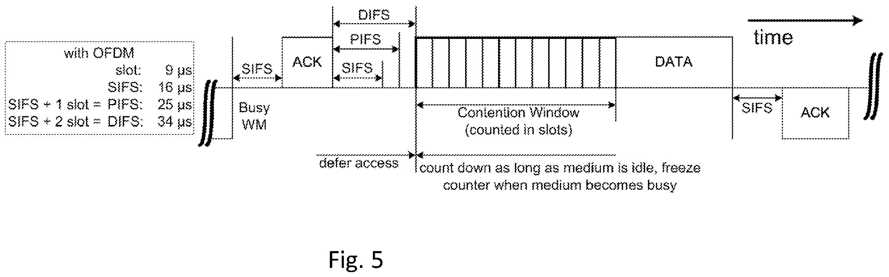

In typical deployments of WLAN, carrier sense multiple access with collision avoidance (CSMA/CA) is used for medium access. This means that the channel is sensed to perform a clear channel assessment (CCA), and a transmission is initiated only if the channel is declared as Idle. In case the channel is declared as Busy, the transmission is essentially deferred until the channel is deemed to be Idle. When the range of several APs (Access Points; a radio node may generally be an Access Point, e.g. for WLAN/WIFI) using the same frequency overlap, this means that all transmissions related to one AP might be deferred in case a transmission on the same frequency to or from another AP which is within range can be detected. Effectively, this means that if several APs are within range, they will have to share the channel in time, and the throughput for the individual APs may be severely degraded. A general illustration of the listen before talk (LBT) mechanism on a single carrier or channel (which may be unlicensed, but the approach of using LBT/CCA may generally be applicable to licensed carrier/s as well) is shown in Figure 5

First consider the single-channel LBT case. After a Wi-Fi station A transmits a data frame to a station B, station B shall transmit the ACK frame back to station A with a delay of 16 µs. Such an ACK frame is transmitted by station B without performing a LBT operation. To prevent another station interfering with such an ACK frame transmission, a station shall defer for a duration of 34 µs (referred to as DIFS) after the channel is observed to be occupied before assessing again whether the channel is occupied.

Therefore, a station that wishes to transmit first performs a CCA by sensing the medium for a fixed duration DIFS. If the medium is idle, then the station assumes that it may take ownership of the medium and begin a frame exchange sequence. If the medium is busy, the station waits for the medium to go idle, defers for DIFS, and waits for a further random backoff period.

To further prevent a station from occupying the channel continuously and thereby prevent other stations from accessing the channel, it is required for a station wishing to transmit again after a transmission is completed to perform a random backoff.

For multi-carrier operation, Wi-Fi follows a hierarchical channel bonding scheme to determine its transmission bandwidth for a frame, which could be 20 MHz, 40 MHz, 80 MHz, or 160 MHz for example. In the 5 GHz band, wider Wi-Fi channel widths of 40 MHz, 80 MHz, 160 MHz or 80+80 MHz are formed by combining 20 MHz subchannels in a non-overlapping manner. A pre-determined primary channel performs the CW-based random access procedure after a defer period if necessary, and then counts down the random number generated. The secondary channels only perform a quick CCA check for a PIFS duration (generally 25 µs) before the potential start of transmission to determine if the additional secondary channels are available for transmission. Based on the results of the secondary CCA check, transmission is performed on the larger bandwidths; otherwise transmission falls back to smaller bandwidths. The Wi-Fi primary channel is always included in all transmissions, i.e., transmission on secondary channels alone is not allowed.

The load-based clear channel assessment in Europe regulation EN 301.893 is discussed in the following. For a device not utilizing the Wi-Fi protocol, EN 301.893, v. 1.7.1 provides the following requirements and minimum behavior for the load-based clear channel assessment.
1) Before a transmission or a burst of transmissions on an Operating Channel, the equipment shall perform a Clear Channel Assessment (CCA) check using "energy detect". The equipment shall observe the Operating Channel(s) for the duration of the CCA observation time which shall be not less than 20 µs. The CCA observation time used by the equipment shall be declared by the manufacturer. The Operating Channel shall be considered occupied if the energy level in the channel exceeds the threshold corresponding to the power level given in point 5 below. If the equipment finds the channel to be clear, it may transmit immediately (see point 3 below).
2) If the equipment finds an Operating Channel occupied, it shall not transmit in that channel. The equipment shall perform an Extended CCA check in which the Operating Channel is observed for the duration of a random factor N multiplied by the CCA observation time. N defines the number of clear idle slots resulting in a total Idle Period that need to be observed before initiation of the transmission. The value of N shall be randomly selected in the range 1... q every time an Extended CCA is required and the value stored in a counter. The value of q is selected by the manufacturer in the range 4...32. This selected value shall be declared by the manufacturer (see clause 5.3.1 q)). The counter is decremented every time a CCA slot is considered to be "unoccupied". When the counter reaches zero, the equipment may transmit.
   The equipment is allowed to continue Short Control Signaling Transmissions on this channel providing it complies with standard requirements.
   For equipment having simultaneous transmissions on multiple (adjacent or non-adjacent) operating channels, the equipment is allowed to continue transmissions on other Operating Channels providing the CCA check did not detect any signals on those channels.
3) The total time that an equipment makes use of an Operating Channel is the Maximum Channel Occupancy Time which shall be less than (13/32) × q ms, with q as defined in point 2 above, after which the device shall perform the Extended CCA described in point 2 above.
4) The equipment, upon correct reception of a packet which was intended for this equipment, can skip CCA and immediately (see note 4) proceed with the transmission of management and control frames (e.g. ACK and Block ACK frames). A consecutive sequence of transmissions by the equipment, without it performing a new CCA, shall not exceed the Maximum Channel Occupancy Time as defined in point 3 above.
   For the purpose of multi-cast, the ACK transmissions (associated with the same data packet) of the individual devices are allowed to take place in a sequence
5) The energy detection threshold for the CCA shall be proportional to the maximum transmit power (PH) of the transmitter: for a 23 dBm e.i.r.p. (equivalent isotropically radiated power) transmitter the CCA threshold level (TL) shall be equal or lower than -73 dBm/MHz at the input to the receiver (assuming a 0 dBi receive antenna). For other transmit power levels, the CCA threshold level TL shall be calculated using the formula: TL = -73 dBm/MHz + 23 - PH (assuming a 0 dBi receive antenna and PH specified in dBm e.i.r.p.).

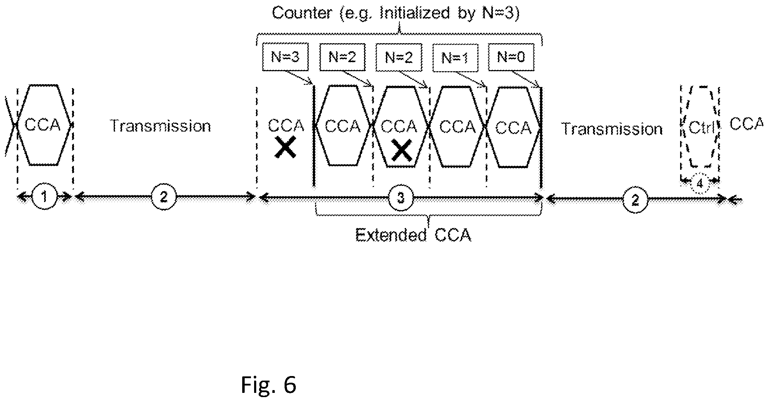

An example to illustrate the EN 301.893 is provided in Figure 6.

Licensed assisted access (LAA) to unlicensed spectrum using LTE is discussed in the following.

Up to now, the spectrum used by LTE is dedicated to LTE. This has the advantage that an LTE system does not need to care about coexistence with other non-3GPP radio access technologies in the same spectrum and spectrum efficiency can be maximized. However, the spectrum allocated to LTE is limited which cannot meet the ever increasing demand for larger throughput from applications/services.

Therefore, it may be advantageous to exploit unlicensed spectrum, in particular in addition to licensed spectrum.

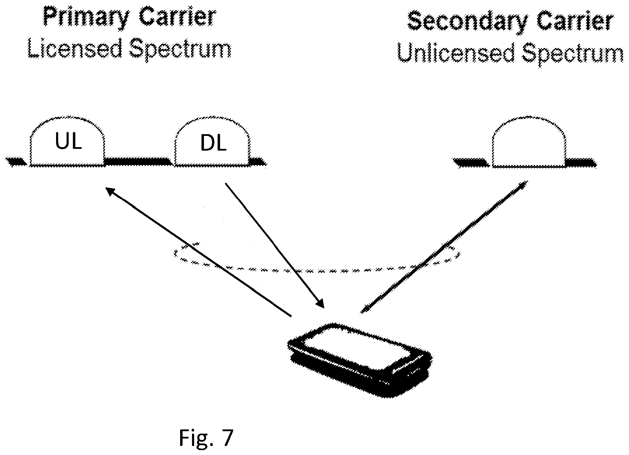

Licensed-Assisted Access is one possible approach allowing the use of unlicensed spectrum. With Licensed-Assisted Access to unlicensed spectrum, as shown in Figure 7, a UE is connected to a PCell in the licensed band and one or more SCells in the unlicensed band. In this disclosure, a secondary cell in unlicensed spectrum may be referred to as LAA secondary cell (LAA SCell). The LAA SCell may operate in DL-only mode (or, in some variant, in UL-only) or operate with both UL and DL traffic. Furthermore, LTE nodes may operate in standalone mode in license-exempt channels without assistance from a licensed cell. In other words, access to unlicensed spectrum may be performed without assistance from and/or independent of licensed spectrum and/or a primary cell. Unlicensed spectrum can, by definition, be simultaneously used by multiple different technologies. Therefore, for LTE, in particular for LAA as described above, coexistence with other systems, e.g. such as based on IEEE 802.11 (Wi-Fi), should be considered.

It should be noted that generally any radio node trying to and/or adapted to access an unlicensed carrier and/or using a LBT/CCA to access a carrier and/or a WIFI/WLAN carrier or frequency (in particular for transmission) may be seen as station in the context of this disclosure. A radio node may be a network node or a user equipment (which may be called terminal interchangeably). A network node may in particular be a controlling node and/or access point and/or base station, e.g. an eNodeB.

To coexist fairly with the Wi-Fi system, transmission on the SCell shall conform to LBT protocols in order to avoid collisions and causing severe interference to ongoing transmissions.

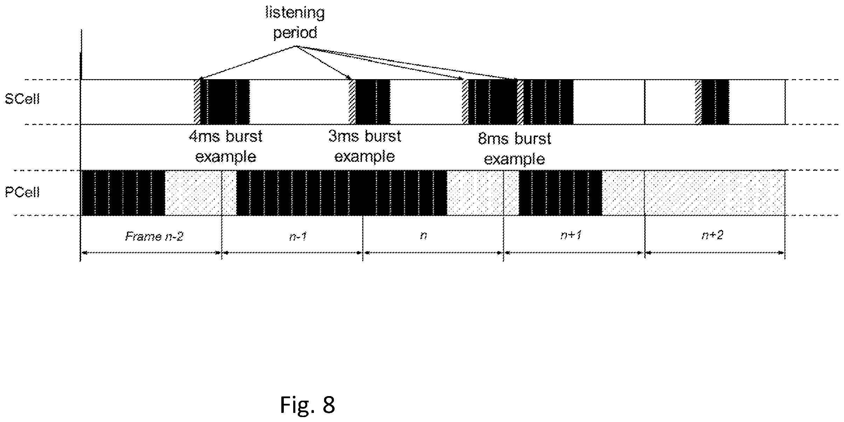

This includes both performing LBT before commencing transmissions, and limiting the maximum duration of a single transmission or transmission burst. The maximum transmission burst duration is specified by country and region-specific regulations, for e.g., 4ms in Japan and 13ms according to EN 301.893. An example in the context of LAA is shown in Figure 8 with different examples for the duration of a transmission burst on the LAA SCell constrained by a maximum allowed transmission duration of 4ms.

Multi-carrier operation is discussed in the following.

The use of LTE carrier aggregation (CA), introduced to LTE since Rel-10, offers means to increase the peak data rate, system capacity and user experience by aggregating radio resources from multiple carriers that may reside in the same band or different band.

In Rel-13, LAA (Licensed-Assisted Access) has attracted a lot of interest in extending the LTE carrier aggregation feature towards capturing the spectrum opportunities of unlicensed spectrum in the 5GHz band. WLAN operating in the 5GHz band nowadays already supports 80MHz in the field and 160MHz is to follow in Wave 2 deployment of IEEE 802.11ac. Enabling the utilization of multi-carrier operation on unlicensed carrier using LAA is deemed necessary as further CA enhancements. The extension of the CA framework beyond 5 carriers has been started in LTE Rel-13. The objective is to support up to 32 carriers in both UL and DL.

In current LTE, licensed carriers can be aggregated and utilized for data transmission to boost the throughput. Due to the introduction of LAA in 3GPP Rel-13, there is a need to support operation on unlicensed carriers, in particular multi-carrier operation. Hence, the LBT design should be carefully considered for multi-carrier operation.

Generally, there is described a method for operating a radio node (sometimes referred to simply as node in the following) as indicated herein. The method may comprise transmitting, e.g. data, on at least one carrier, when and/or after reaching a wait time, wherein the wait time may be determined based on one or more operational conditions and/or parameters. The method may comprise performing a LBT procedure on the at least one carrier. It may be considered that the method comprises determining the wait time.

Moreover, there is described a radio node. The radio node may be adapted for performing one of the methods for operating a radio node described herein.

Alternatively or additionally, there is described a radio node adapted for, and/or comprising a transmitting module for, transmitting, e.g. data, on at least one carrier when and/or after reaching a wait time. The wait time may be determined based on one or more operational conditions and/or parameters. It may be considered that the radio node is adapted for, and/or comprises a LBT module for, performing a LBT procedure on the at least one carrier. The radio node may be adapted for, and/or comprise a determining module for, determining the wait time.

The radio node may be adapted for multi-carrier operation and/or CA pertaining to the at least one carrier. Transmitting may be performed on one or more carriers after and/or at the wait time, e.g. on one or more carriers for which a LBT procedure and/or monitoring resulted in an idle determination, e.g. at and/or before the wait time, e.g. in a monitoring interval. The radio node may be adapted for LAA, with the at least one carrier (on which LBT/CCA may be performed) being a carrier of a SCell. Generally, the radio node may be a radio for a wireless communication network. The method may be performed by the radio node and/or be a method for operating the radio node in a wireless communication network.

Performing a LBT procedure may comprise determining the wait time and/or withholding transmitting until the wait time is reached. Performing the LBT procedure may comprise performing a random backoff and/or be based on a random backoff number. The wait time may be determined to be later/after the time associated with performing/ending the random backoff. The LBT procedure may be performed on one or a plurality of carriers.

Determining the wait time may be based on the LBT procedure and/or the result of the LBT procedure, in particular based on the time (point in time) the LBT procedure determines the at least one carrier to be idle.

Transmitting may be performed based on the LBT procedure, in particular based on the LBT procedure determining the carrier to be idle. In particular, transmitting may be conditional on the idle determination and/or only be performed if the carrier is determined to be idle. Transmitting may comprise transmitting on the at least on carrier in a LAA arrangement, in which the at least one carrier may be associated to a SCell.

There is also disclosed a program product comprising instructions. The instructions may cause control circuitry (e.g., control circuitry of a radio node) to perform and/or control any one of the method described herein.

In addition, there is disclosed a storage medium storing a program product as described herein and/or instructions. The instructions may cause control circuitry (e.g., control circuitry of a radio node) to perform and/or control any one of the method described herein.

The radio node may in particular be a network node (e.g., eNodeB) or a user equipment (or terminal).

A radio node may generally be adapted for, and/or comprise a LBT module for performing, and/or perform, a LBT and/or CCA procedure for a and/or each carrier, in particular carrier/s on in an unlicensed spectrum (also referred to as unlicensed carrier), in order to and/or to access and/or before accessing the channel or carrier.

The node may be adapted to transmit on and/or to access, and/or comprise a transmitting module for transmitting on and/or accessing, a carrier, and/or the node may transmit on or access a carrier, if the LBT and/or CCA procedure succeeds on a carrier, and/or based on a successful LBT and/or CCA procedure for that carrier. A successful LBT and/or CCA procedure may be based on the carrier being determined and/or sensed and/or detected to be "idle" and/or not in use.

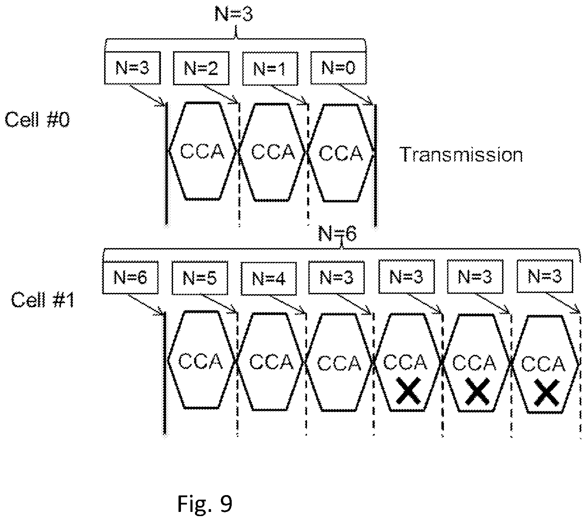

The node may end up with different intended transmit times for different carriers, if a random backoff is used for a LBT procedure and/or due to different interference levels on each carrier. An example is given in Figure 9 to illustrate this situation.

Denoted are two carriers for a node as cell #0 and cell 1. Cell #0 and cell #1 are doing LBT with different random number N to access the channel. Both cells find the corresponding channels idle for first few CCA slots when performing LBT. Since the random number N is smaller for cell #0, LBT succeeds earlier on cell #0 than on cell #1 which is still counting down the random number. Then cell #0 starts the transmission, and forces the node to postpone sensing for the LBT procedure since the node may not be able to transmit and receive simultaneously on different carriers if they are close to each other in frequency. This limitation is caused by energy from the transmission on cell #0 leaking into the receive filter of cell #1 and causing significant interference so that cell#1 will never get a chance to transmit when cell #0 transmits.

As a result, only one carrier is utilized for transmission and it is very unlikely to operate on multiple carriers simultaneously on unlicensed spectrum. With an increased number of carriers being aggregated, the probability that all carriers will be able to be utilized further goes down.

While the approaches described herein may be referring to LTE-based systems, it should be understood that they may be applicable to different systems and/or in different contexts, in particular such dealing with carrier access using a LBT and/or CCA approach.

An adaptive post-backoff wait time is proposed for multicarrier LBT scenarios. The duration of the post-backoff wait time may be based on and/or be (e.g., dynamically) adapted based on operational parameters and /or factors. An operational parameter may for example indicate and/or comprise and/or be based on any one or any combination of a number of unlicensed carriers used (e.g., per radio node and/or per access point/base station, and/or within coverage), traffic load/s, QoS class, and/or interference conditions, e.g. as described herein.

According to the approaches described herein, performing LBT may comprise and/or be based on and/or comprise an adaptive post-backoff wait time (e.g., before performing transmitting) as described herein. The radio node and/or LBT module may be adapted accordingly.

By postponing transmission by a period that may extend up to the end of a wait time, the probability that LBT is performed successfully for multiple carriers (and/or multiple carriers complete the LBT procedure) and may be used for transmitting simultaneously is greatly enhanced. Carrier or channel sensing/data reception can be performed on non-transmitting carrier(s) (up to the wait time), as transmitting is performed simultaneously (such sensing on non-transmitting carrier/s may not be performable if one or more of the other carriers of that node are transmitting).

A radio node and/or a transmitting module of the node may be adapted for transmitting one or more carrier, in particular based on a LBT and/or CCA procedure performed on a carrier used and/or intended for transmitting.

Transmitting may be performed on one or more carriers, in particular based on a LBT and/or CCA procedure performed on each carrier used for transmitting. The radio node and/or its transmitting module may generally be adapted for transmitting on a plurality of carriers. It may be considered that the radio node and/or a LBT module of the radio node is adapted to perform a LBT and/or CCA procedure for one or more of the plurality of carriers.

Alternatively or additionally, the radio node and/or LBT module may be adapted for transmitting on one or more of the plurality of carriers based on a LBT and/or CCA procedure performed for (each of) the one or more carriers. Transmitting may be performed accordingly.

Example applications of the proposed adaptive wait time approach are shown for two main categories of multicarrier LBT:
- Multiple random backoff channels/carriers (MRBC)

The radio node, and/or a LBT module of the node, may be adapted for performing and/or may perform LBT (and/or performing LBT and/or CCA may comprise performing LBT and/or CCA) on each carrier of one or more or a plurality of carriers, which may have either the same random number or different random numbers. The radio node, and/or a transmitting module of the radio node, may be adapted for transmitting (and/or transmitting may comprise transmitting) on the corresponding carriers based on the LBT and/or where LBT succeeded, in particular after, and/or after following or reaching, the post-backoff wait time. The post-off wait time may be determined to be the same for the plurality of carriers. Generally, the radio node, and/or a determining node of the radio node, may be adapted for determining a (post-backoff) wait time. It may be considered that the wait time is determined based on one or more of the random numbers, in particular it may be based on the largest random number (the value of the largest random number). It may be considered that several carriers have associated to them the same random number; the largest number may correspond to the largest value of the largest number, taken once if present more than once). It may generally be considered that the wait time is determined to be after the time associated with the backoff with the largest random number.

Issues pertaining to Single random backoff channel/carrier (SRBC) are discussed in the following.

The radio node, and/or a LBT module of the radio node, may be adapted for performing, and/or performs LBT, (and/or performing LBT may comprise performing LBT) with (e.g., full-fledged) random backoff on at least one or one of a plurality of carriers (the carrier on which LBT with random backoff is performed may be called the single backoff carrier). The radio node, and/or a monitoring module of the radio node, may be adapted for monitoring one or more of the other plurality of carriers (which are not the single backoff carrier, and only if present) at the monitoring time, which may be a time before the wait time. The time difference between the monitoring time and the wait time may be called a monitoring interval. The monitoring interval may be a short period, e.g. determined such that a (quick) CCA check/LBT procedure, e.g. with one or a few (e.g., three or less than three CCAs) on the other carriers may be performed in the monitoring interval.

Monitoring may generally comprise performing such check and/or procedure. The radio node, and/or a transmitting module of the radio node, may be adapted for transmitting (and/or transmitting may comprise transmitting), e.g. data, on the single backoff carrier (and/or random backoff channel) and/or a subset of the other carriers that are determined to be idle based on the monitoring.

Monitoring may generally determine a carrier to be idle if the one or few CCA checks indicate that the carrier is not in use, e.g. based on the energy and/or power (and/or respective density) sensed or determined or measured with the one or few CCAs.

The approaches may
- Facilitate the utilization of multi-carrier operation on unlicensed carriers
- Achieve good coexistence between LAA LTE and LAA LTE, and between LAA LTE and other technologies for channel access on an unlicensed carrier
- Facilitate multi-carrier operation in standalone LTE-U networks
- May improve performance/fairness of access in particular in heavy load scenarios with multiple radio nodes trying to access the carriers, even for single carrier scenarios (in which a radio node tries to use carrier singly and/or independent of each other).

Generally, the approach/es described herein (in particular, adaptive post-backoff wait time/s) are applicable to both LAA LTE and standalone LTE operation and/or for accessing carriers using LBT and/or accessing license-exempt (unlicensed) channels/carriers. The approaches are generally applicable for both DL and UL transmissions, for both FDD and TDD systems. Generally, separate post-backoff wait times may be defined for (different) groups of unlicensed carriers available at the same node, e.g. with one wait time per group. A radio node and/or one or more of its corresponding modules may be correspondingly adapted.

A main parameter of the post-backoff wait time principle is the wait time, which may be referred to as maximum wait time. The maximum wait time may define and/or indicate a point in time up to which channels with completed backoff (and/or successful LBT procedure) will wait before transmitting. The node may continue to monitor the channel and/or carrier/s (with completed backoff) while waiting (up to the wait time) to ensure and/or determine that the channel/carrier/s continues to remain idle. Alternately or additionally, the node may and perform a (e.g., short, e.g. one or few CCAs) CCA operation before transmission. SCells which have not completed the random backoff procedure by the (maximum) wait time will generally not be allowed to transmit together with carriers that have entered the post-backoff waiting phase.

A waiting phase may refer to the time interval between the time of having performed a successful number of CCAs and/or a successful LBT and/or determination of the carrier/channel to be idle, and the wait time. The waiting phase may generally be a time interval (and may have a duration), in particular up to the wait time. Different carriers may have associated to them different waiting phases, even if they have the same wait time. It may be considered that a waiting phase is, and/or has a duration of, zero, e.g. if the carrier is determined to be idle at the and/or directly ending at the wait time. Formally, the duration of a waiting phase may be seen a negative, if no idle determination of the carrier has been achieved until the wait time.

Generally, the wait time, which also may be called post-backoff wait time, may be defined relative to a reference time and/or point in time, and/or in terms of a number of CCA slots, in particular relative to a reference time or point in time (e.g., after beginning performing CCA and/or LBT procedure), and/or as an offset relative to a subframe (and/or a reference time or point relative to a subframe, e.g. a subframe beginning), and/or frame (and/or a reference time or point relative to a subframe, e.g. a subframe beginning), and/or a OFDM symbol boundary or a set of OFDM symbols, e.g. on an SCell (e.g., a SCell a carrier the CCA and/or LBT is associated to and/or performed for) or a PCell. The wait time may define a point in time after a backoff has ended and/or on which it ends. The backoff may be determined by and/or based on a random backoff counter.

The duration and/or location (in time) of the post-backoff wait time in the following variants may be adapted dynamically based on one or more factors and/or may be determined based on one or more of the following operational parameters or conditions:
- number of carriers, for example operated in unlicensed spectrum and/or licensed shared spectrum, and/or
- traffic load/s, and/or
- aggregated bandwidth of recent transmissions, and/or
- current CW or random backoff counter(s), and/or
- current defer period, and/or
- QoS class of data awaiting transmission, and/or
- interference conditions. Interference conditions may for example be obtained directly from measurements by the transmitting node (the radio node) or via measurement reports by other nodes in the system.

The radio node may be adapted for determining and/or adapting the wait time. Determining and/or adapting the wait time may be performed dynamically and/or based on at least one and/or one or more than one operational parameters and/or factors and/or in particular according to one or more of the criteria identified herein.

The post-backoff wait time may be checked and/or modified (and/or determined or adapted) after every transmission or transmission burst, or after a sequence of transmissions or transmission bursts. Adapting the wait time may comprise such checking and/or modifying.

Furthermore, the maximum wait time that is initially set or determined (e.g., prior to an intended transmission or transmission burst) may be extended and/or repeated one or more times, e.g. to define a new maximum wait time for the same intended transmit burst, in order to allow additional time for SCells to complete their random backoff.

The number of carriers that are considered can be limited to a set of carriers within only part of a band or set of bands and may therefore not consider all carriers within a band or set of bands.

Transmitting a burst (which may be called a transmission burst) may generally comprise transmitting on at least one, in particular on more than one, carriers, for which a CCA and/or LBT procedure may have been performed. A burst may have a burst duration, which may be pre-determined and/or a maximum burst duration, e.g. defined by a standard and/or by regulations.

Transmitting a burst may comprise non-transmitting for a quiet time after the burst duration, e.g. stopping transmitting for a time, and/or performing a CCA/LBT procedure before transmitting again. A quiet time may have a quiet duration, which may be defined according to a standard and/or regulations.

Transmitting, e.g. of data, may generally comprise transmitting a burst.

Transmitting, e.g. of data and/or of a burst, may be performed after and/or beginning with the wait time.

A wait time may generally pertain or refer to a time interval and/or a transmitting time structure and/or be defined relative to a reference time (which may be a point in time), which may be according to a telecommunication standard. Such an interval or structure or reference time may pertain, and/or be defined relative to, a structure scheduled for transmitting, and/or a typical structure scheduled for transmitting, e.g. using allocating data. It may be considered that such an interval or structure in particular corresponds to a slot or subframe, e.g. according to LTE.

Adaptive post-backoff wait time in MRBC LBT is discussed in the following.

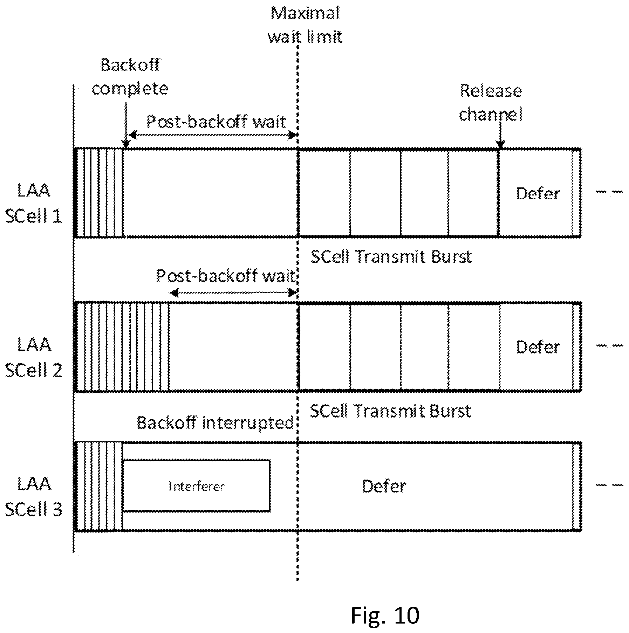

In a variant, the use or application of a post-backoff wait time is described for MRBC scenarios. Figure 10 depicts a non-limiting example with three LAA SCells, each operating its own random backoff cycle. In other words, each SCell individually performs CCA checks (in slots) in order to decrement its random backoff counter. The SCells may have independent backoff counters or may be jointly assigned a common backoff counter.

As a non-limiting example for the MRBC case, the first SCell to finish its random backoff procedure, which is SCell 1 in Figure 10, determines the maximum wait time to be some number of CCA slots in the future (respectively, the wait time is determined accordingly). SCell 2 is the next to finish its random backoff procedure and enters the post-backoff waiting phase with the same maximum wait time. The backoff countdown of SCell 3 is interrupted by the activity of an interfering transmission, which forces SCell 3 to defer until the end of the interfering transmission.

Only SCells 1 and 2 have completed their backoff procedure by the maximum wait time limit, after which they begin simultaneous transmission. An additional short CCA check of one or more CCA slots may be performed just before starting transmission by all carriers that were in the post-backoff wait state or alternately, channel may be continuously monitored after the backoff counter reaches zero to check if the channel is idle. The same principle can be applied for an arbitrary number of SCells. In another example, the maximum wait time may be pre-determined by the eNB.

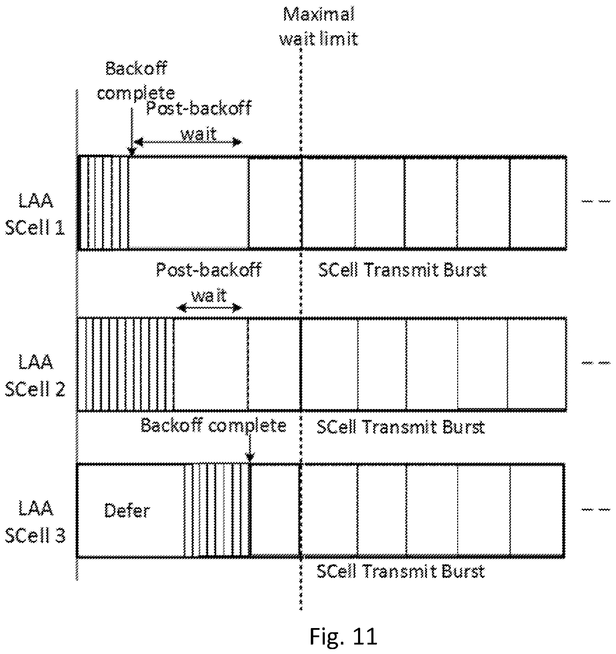

If all SCells finish their backoff procedure before the maximum wait time, they may begin transmitting together without waiting until the maximum wait time boundary, as shown in Figure 11 for an example of three LAA SCells that finish their backoff procedures at different time instances. In this case, when the node observes that the last SCell is about to finish its backoff, if the channel is not already being monitored on the SCells continuously, a short CCA is performed right before the time instant when transmissions occur on all the SCells simultaneously.

Adaptive post-backoff wait in SRBC LBT is discussed in the following.

In the second variant, post-backoff wait time is considered for a multi-carrier scheme with a single random backoff channel. For illustration, the remaining carriers which do not perform random backoff are denoted to be ancillary carriers. The carrier that is designated as the single random backoff channel with random draws of a backoff counter and possible CW size adaptation may be changed dynamically prior to each intended transmit burst.

The choice of the SRBC may be made based on channel interference conditions for example, or the presence or absence of other SRBCs in adjacent networks as another example. In particular, the SRBC (the single backoff carrier) may be chosen to be the one with the highest or lowest interference. Alternatively, the choice of the SRBC may be random.

In one non-limiting example, the adjacent network is an IEEE 802.11 network with its primary channel on the same carrier as the SRBC of LAA. In another non-limiting example, the primary channel for the adjacent IEEE 802.11 network may be on a carrier that is different from the one designated as the SRBC for LAA. In the case of a UE attempting multicarrier UL transmission, its SRBC may be configured by the eNB. Furthermore, the carrier that is chosen to be the SRBC can be the carrier that has taken the longest time on average to finish its countdown, measured from past LBT operations, or alternatively the shortest time on average to finish its countdown.

On the ancillary carriers (the carrier not the SRBC), a short CCA of fixed duration is performed to check which of them are available for transmission along with the random backoff channel. This ancillary CCA (one or a few (e.g., 3 or less) CCAs) check may be performed in parallel with the end of the random backoff countdown or during the defer period on the SRBC, i.e., when the SRBC senses the medium to be idle and is approaching a feasible transmission start time (e.g., the wait time).

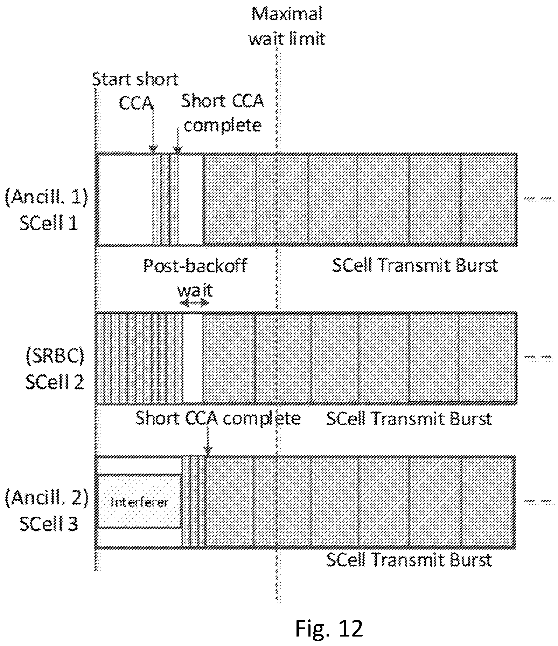

The post-backoff wait time is then applied on the SRBC to allow one or more ancillary carriers to complete the quick CCA check, as shown in the example in Figure 12. In Figure 12, the SRBC is located on SCell 2, and a short CCA is started on the ancillary carrier on SCell 1 when the SRBC is close to completing its random backoff. After the short CCA is completed on SCell 1, it continues monitoring the channel to ensure that the channel remains idle or a short CCA is performed before transmission on the channel. The SRBC sets the maximum wait time after completing its random backoff countdown.

The start of the short/quick CCA check on the ancillary carrier of SCell 3 is delayed until the medium becomes idle. The SRBC remains in the post-backoff wait state until the end of the short CCA on ancillary SCell 3, after which transmission begins across all three carriers prior to the maximum wait limit boundary. Only those ancillary carriers which have completed the short CCA check before the end of the maximum wait time are allowed to transmit in aggregation with the SRBC. A short CCA check is performed on the SRBC also if the channel was not monitored after the end of the random backoff.

If the transmission associated to a carrier results in an update to the contention window length, it will be updated for either one or both of the
- associated carrier,
- SRBC.
For the next transmission the processes of selecting the SRBC can be redone according to the above steps.

In another example of this variant, multiple carriers perform full random backoff procedures in parallel, and the first SCell to complete its backoff procedure is designated as the SRBC and initiates the quick CCA check on all or some of the other channels, regardless of their backoff counter state.

The other channels/carriers (except for the newly-designated SRBC) are then automatically designated as ancillary carriers and do not continue with their random backoff procedure. Thus, the SRBC is selected in a dynamic manner based on the earliest completion of the random backoff procedures across multiple carriers.

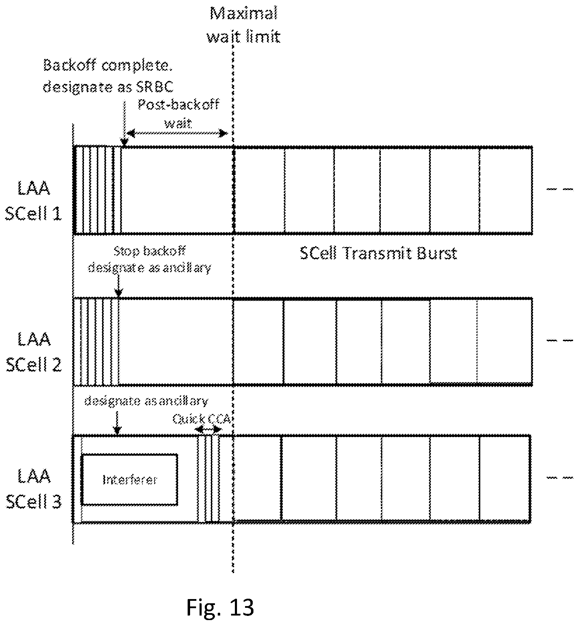

The dynamically selected SRBC then sets the maximum wait time to allow the quick CCA to succeed on as many ancillary carriers as possible. An example is shown in Figure 13, where three SCells are each performing a full random backoff procedure. SCell 1 is the first to complete its random backoff, after which it is designated as the SRBC and SCells 2 and 3 are designated as ancillary channels. No short CCA is necessary on SCell 2 in this example since its random backoff indicated that the channel was clear for at least as long as a short CCA while SCell 1 was nearing the end of its own random backoff. A maximum wait time is set by the SRBC (SCell 1), which allows enough time for a quick CCA to be completed by ancillary SCell 3. In this example, the SCells transmit together at the maximum wait limit time. In another implementation, they may transmit together as soon as the quick CCA is completed on ancillary SCell 3. In all cases, the node ensures that the channel is idle for at least the period of a short CCA before transmission on a channel.

In another example of this variant, the second or third channels that finish their random backoff may be designated as the SRBC.

Fast adaptive post-backoff wait in MRBC LBT is discussed in the following.

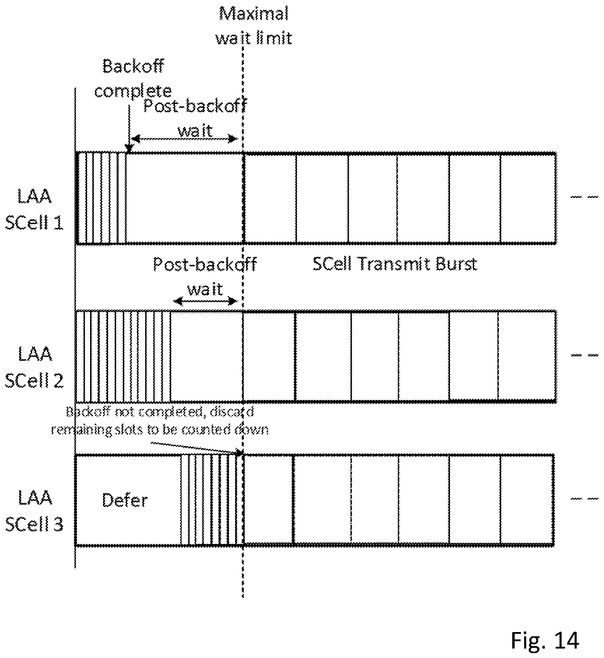

In the third variant, the maximum wait limit can be used for early transmission in MRBC LBT. Figure 14 illustrates the example of three carriers with MRBC LBT. The SCells may have independent backoff counters or may be jointly assigned a common backoff counter. When the maximum wait time is reached by sCell 1, the other sCell 3 may still count down backoff due to different levels of congestion in different carrier. In this case, sCell 3 cuts off the remaining backoff count to enable transmission at the same time as sCell 1 and 2. This can allow all three sCells in the example being able to transmit at the same time to improve data rates.

Adaptive post-backoff wait in dynamic SRBC LBT is described in the following.

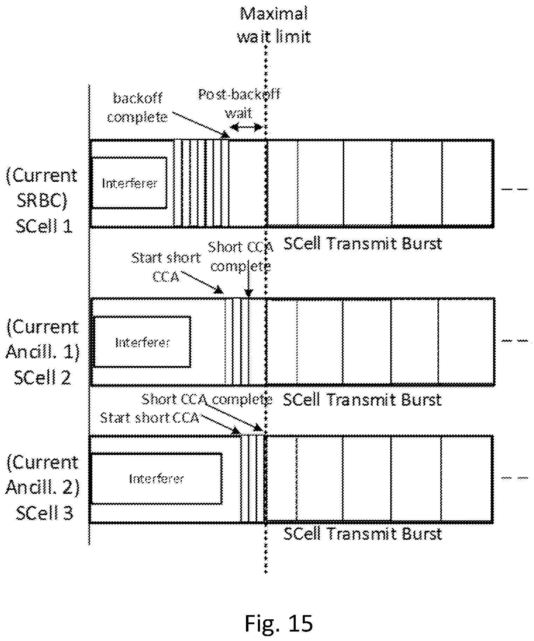

In a variant, post-backoff wait time may be considered for a multi-carrier scheme with a single random backoff carrier/channel. SRBC is dynamically changed over time to calculate the maximum wait limit. In Figure 15, a non-limiting example shows that sCell 1 is chosen as current SRBC based on its channel being the first to transition from busy to idle state. The other sCell 2 and 3 are designated as current ancillary carrier 1 and 2, respectively. Then, random backoff is conducted in sCell 1 and the maximum wait limit is added to determine transmission start time. The other current ancillary carriers 1 and 2 have short CCA just before the maximum wait time specified by current SRBC carrier. A short CCA is performed on the SRBC as well before transmission if it was not continuously monitored to be idle during the wait time.

Maximum wait time updates are discussed in the following.

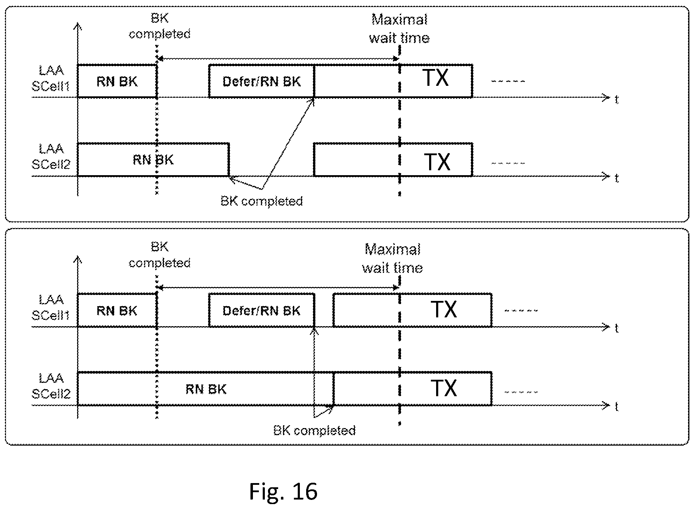

When LBT procedure is executed for transmission on multi-channel, the determined maximum wait time can be updated before transmission in order to maximize the capacity by increasing the chance to have more carriers with granted access. In a non-limiting example, the maximum wait time may be determined by and/or based on the SCell and/or the time for which the random backoff reaches zero first (between more than one SCells respectively associated carriers) as shown in Figures 16 to 19.

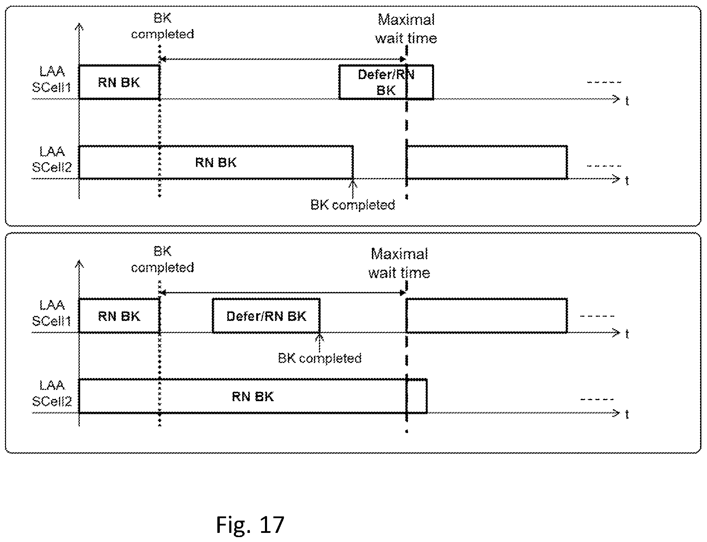

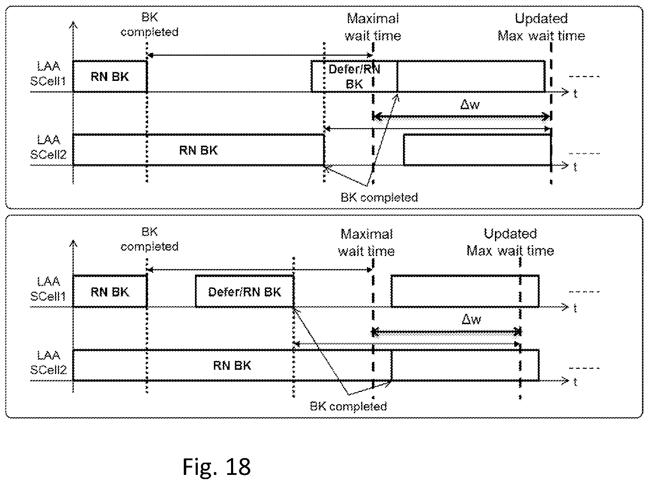

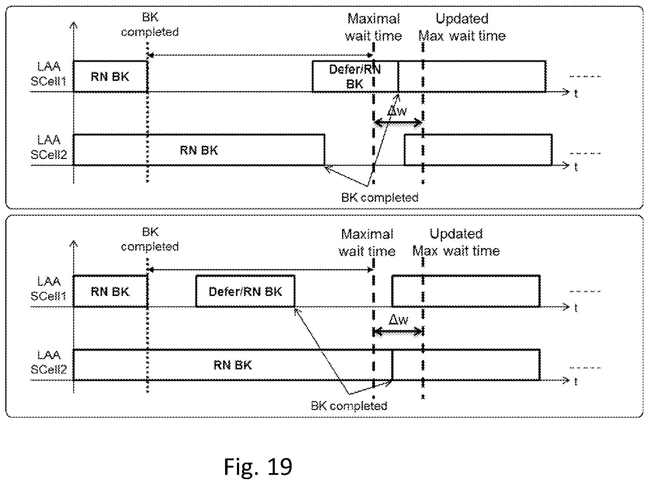

However, there might be scenarios such as those illustrated in Figure 17. In the first example in this figure, the SCell which has completed the random backoff (in this example SCell 1) is experiencing new interference while waiting. The consequence could be that when the maximum waiting time is expired, the transmission is not possible on this carrier since the SCell is deferring or has not completed its new random backoff. The other example shown in this figure shows the case that when the maximum wait time has expired the transmission is not possible on some carriers (in this case SCell 2) since the random backoff is not completed but the estimated time needed for the completion of the random back off is not significant. In scenarios described above it seems to be beneficial to increase the maximum wait time to increase the chance for transmission on more carriers. As shown in the examples in Figure 18 and Figure 19, increasing the wait time by a factor of Δw clearly increases the chance to transmit on both carriers.

Generally, since the interference situation on the carriers in unlicensed spectrum is not predictable, the node has to make a decision whether or not to increase the maximum wait time based on whether the number of available carriers is sufficient or not when the expiry of the original maximum wait time occurs. Determining the wait time may generally comprise determining and/or updating and/or increasing the wait time correspondingly, e.g. based on one or more criteria. Examples of the criteria for deciding to increase the maximum wait time can be the following:
- The supported capacity on the accessed carriers is not sufficient hence it is beneficial to wait more to increase the chance of accessing more carriers. This can be dependent, for example, on the QoS class of the traffic. As an example such an additional wait time can be used for non-delay sensitive traffic.
- The estimated remaining time to complete the random backoff counter on one or couple of SCells is not too large for example as compared to the total maximum wait time. The content of the random backoff counter can be used to estimate the remaining time. This can be viewed as the potential additional throughput gains being larger for waiting longer compared to transmitting at the given time
- The node is experiencing a low load scenario with some bursty interference. It may be worth waiting a bit more until the short burst of interference has vanished. The node could use the past history of its buffer occupancy to determine whether it is beneficial to increase the maximum wait time. For instance, if the node observes that its buffer occupancy is increasing over the past X ms, it may choose to transmit with the available carriers rather than increase the wait time. On the other hand, if the buffer occupancy is being maintained at an acceptable level or decreasing, it may choose to increase the maximum wait time.
- The node could also use some combination of the above criteria to make its decision on increasing the maximum wait time. For instance, the node could determine that the buffer occupancy is increasing, but the supported capacity on the accessed carriers is not enough to reduce it while the estimate remaining time for a large number of SCells to complete their backoff may be low thus holding the potential for a significant increase in the supported capacity. In this case, it may decide to increase the maximum wait time.

When it has been decided to increase the maximum wait time, the amount of increase, denoted by Δw here for convenience, can be determined in different ways. Some non-limiting examples are provided below:
- The amount of increase is fixed and pre-determined. Examples can be a fraction of the maximum wait time, the maximum wait time.
- The node can be also configured with a set of values for increasing the maximum wait time where the appropriate values can be chosen from this set based on some criteria such as load in the system such that small values are used at high load and larger values at low load.
- The amount of increase is determined by changing the reference point of the maximum wait time to another completion time of another random backoff than the 1^{st} one (see the example in Figure 18/19).
- The amount of increase is a function of the SCells random backoff status. In non-limiting examples the amount of Δw is determined as a function of estimated remaining times of the random backoff on different carriers (for example the content of the random backoff counter scaled by the slot time can be used as the estimated remaining time. Another alternative is the corresponding contention window size scale by the slot size). Examples of the function could be the maximum or minimum value of the estimated remaining times or a linear combination of them.
- The node could use the past history of its buffer occupancy to determine the amount of increase in the maximum wait time. For instance, if the node observes that its buffer occupancy is increasing over the past X ms, it may choose to increase the maximum wait time by only a small amount. On the other hand, if the buffer occupancy is being maintained at an acceptable level or decreasing, it may choose to increase the maximum wait time to a larger degree. This is akin to using the rate of change of perceived load as the criteria rather than simply the load.
- The node could also use some combination of the above criteria to make its decision on increasing the maximum wait time. For instance, the node could determine that the buffer occupancy is increasing at a high rate and decide to use smaller increases in maximum wait time from with a pre-configured set or to the completion point of another random backoff that is closer to being finished.
- The increase of decrease of the maximum wait time can be done at each corresponding time instant when assessing which carriers are available for transmission. It could also be done on a more long term basis in form of a control loop and slightly be adjusted to a longer and shorter time based on the estimates of the required data rate and the channel conditions.

A new principle of adaptive post-backoff wait time is proposed in particular for multi-carrier LBT protocols. The application of this principle is exemplified for two major LBT categories: multiple random backoff channels operating in parallel, and a single random backoff channel with quick CCA check on other channels.

It may be generally considered that choosing and/or determining by a cell comprises determining, by the radio node and/or determining module, based on information pertaining to the cell, in particular based on the result of a LBT procedure performed on a carrier associated to the cell.

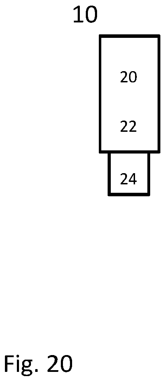

Figure 20 schematically shows a user equipment 10 as an example of a radio node. User equipment 10 comprises control circuitry 20, which may comprise a controller connected to a memory. Any module of a user equipment may be implemented in and/or executable by, user equipment, in particular the control circuitry 20. User equipment 10 also comprises radio circuitry 22 providing receiving and transmitting or transceiving functionality, the radio circuitry 22 connected or connectable to the control circuitry. An antenna circuitry 24 of the user equipment 10 is connected or connectable to the radio circuitry 22 to collect or send and/or amplify signals. Radio circuitry 22 and the control circuitry 20 controlling it are configured for cellular communication and/or D2D communication, in particular utilizing E-UTRAN/LTE resources as described herein. The user equipment 10 may be adapted to carry out any of the methods for operating a radio node or terminal disclosed herein; in particular, it may comprise corresponding circuitry, e.g. control circuitry. Transmitting by such a radio node may comprise transmitting one or more UL carriers.

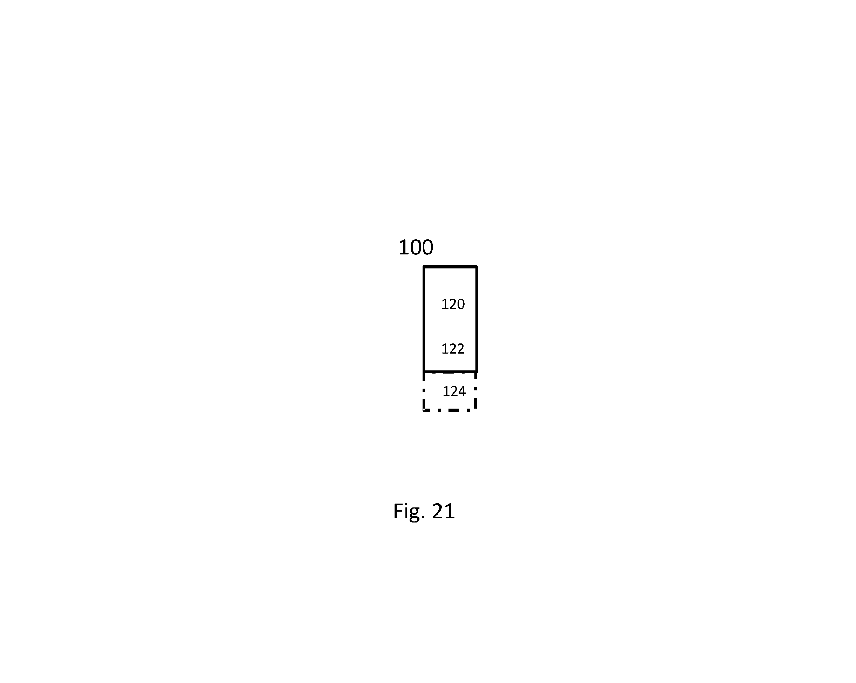

Figure 21 schematically show a network node or base station 100 as an example of a radio node, which in particular may be an eNodeB. Network node 100 comprises control circuitry 120, which may comprise a controller connected to a memory. Any module of a network node, e.g. a receiving module and/or transmitting module and/or control or processing module and/or scheduling module, may be implemented in and/or executable by the network node, in particular the control circuitry 120. The control circuitry 120 is connected to control radio circuitry 122 of the network node 100, which provides receiver and transmitter and/or transceiver functionality. An antenna circuitry 124 may be connected or connectable to radio circuitry 122 for signal reception or transmittance and/or amplification. The network node 100 may be adapted to carry out any of the methods for operating a radio node disclosed herein; in particular, it may comprise corresponding circuitry, e.g. control circuitry. Transmitting by such a radio node may comprise transmitting one or more DL carriers.

In the context of this specification, a wireless communication network may comprise one or more (radio) nodes or devices adapted for wireless and/or radio communication, in particular according to a pre-determined standard like LTE. It may be considered that one or more radio nodes are connected or connectable to a core network and/or other network nodes of the network, e.g. for transmission of data and/or control. A wireless communication system may comprise at least one radio node (which may be a base station or eNodeB), which may be connected or connectable to a core network, and/or may comprise and/or provide control functionality and/or at least one corresponding control node, e.g. for mobility management and/or data packet transmission and/or charging-related functionality.

A radio node may generally be any device adapted for transmitting and/or receiving radio and/or wireless signals and/or data, in particular communication data, in particular on at least one carrier. The at least one carrier may comprise a carrier accessed based on a LBT procedure (which may be called LBT carrier in the following), e.g. an unlicensed carrier. It may be considered that the carrier is part of a carrier aggregate. A carrier aggregate may generally comprise a plurality of carriers, wherein one carrier may be a primary carrier and/or other carriers may be secondary carriers. It may be considered that carriers of a carrier aggregate are synchronized according to a pre-defined time structure and/or in relation to a synchronizing carrier, which may be a primary carrier. A primary carrier may be a carrier on which control information and/or scheduling data is transmitted and/or which carries one or more control channels for the carrier aggregate and/or one or more carriers. A carrier aggregate may comprise UL carrier/s and/or DL carrier/s. A carrier aggregate may comprise one or more LBT carriers. It may be considered that a carrier aggregate additionally comprises one or more carriers for which no LBT procedure for access is performed, e.g. licensed carriers. A primary carried may be such a carrier, in particular a licensed carrier. Accordingly, in some variants a carrier for which LBT is performed may be in a carrier aggregate comprising at least one carrier for which no LBT is performed, in particular a licensed carrier. A licensed carrier may generally be a carrier licensed for a specific Radio Access Technology (RAT), e.g. LTE. A radio node may in particular be a user equipment or a base station and/or relay node and/or micro-(or pico/femto/nano-)node of or for a network, e.g. an eNodeB. Transmission of data may be in uplink (UL) for transmissions from a user equipment to a base station/node/network. Transmission of data may be considered in downlink (DL) for transmission from a base station/node/network to a user equipment. The target of transmission may generally be another radio node, in particular a radio node as described herein.

Communication data may be data intended for transmission. It may be considered that communication data comprises, and/or is of, one or more types of data. One type of data may be control data, which in particular may pertain to scheduling and/or measurements and/or configuring of radio nodes. Another type of data may be user data. Communication data may be data to be transmitted, which may be stored in a data buffer of the radio node for transmission.

The LBT procedure may comprise a number of Clear Channel Assessments or CCA procedures, wherein the number may be larger than one and/or be based on a random backoff number or counter.

A radio node may generally be a network node or a terminal and/or user equipment.

A LBT procedure may comprise one or more Clear Channel Assessment (CCA, may also be called Clear Carrier Assessment) procedures. A CCA procedure may generally comprise sensing and/or determining the energy and/or power received on or for the channel or carrier (by the radio node performing the CCA procedure) the LBT procedure is performed on and/or pertains to, in particular over a time interval or duration, which may be called the CCA interval or duration. Generally, different CCA procedures may have different CCA intervals or durations, e.g. according to a configuration. The number of CCA procedures to be performed for a LBT procedure may be dependent on a backoff counter, which may be random and/or be based on one or more parameters as described herein. A CCA may indicate that a carrier or channel is idle if the power and/or energy sensed or determined is below a threshold, which may be a pre-determine threshold and/or be determined by the radio node, e.g. based on operating conditions and/or a configuration; if it is above or reaching the threshold, the carrier or channel may be indicated to be busy.

A LBT procedure may be considered to determine that access to a carrier is allowed based on a number (e.g. a pre-determined number, e.g. according to a backoff counter) of CCAs performed indicating that the carrier or channel is idle. In some cases, the number may indicate a number of consecutive indications of the carrier being idle. It may be generally considered that the radio node is adapted for such sensing and/or determining and/or for carrying out CCA, e.g. by comprising suitable sensor equipment and/or circuitry and/or a corresponding sensing module. Such a sensing module may be part of and/or be implemented as or in a LBT module.

Performing a LBT procedure to determine whether accessing a carrier or channel is allowed may include performing one or more CCA procedures on that carrier or channel.

Generally, control circuitry may comprise integrated circuitry for processing and/or control, e.g. one or more processors and/or processor cores and/or FPGAs (Field Programmable Gate Array) and/or ASICs (Application Specific Integrated Circuitry). Control circuitry may comprise and/or be connected to and/or be adapted for accessing (e.g. writing to and/or reading from) memory, which may comprise any kind of volatile and/or non-volatile memory, e.g. cache and/or buffer memory and/or RAM (Random Access Memory) and/or ROM (Read-Only Memory) and/or optical memory and/or EPROM (Erasable Programmable Read-Only Memory). Such memory may be adapted to store code executable by control circuitry and/or other data, e.g. data pertaining to communication, e.g. configuration/s and/or address data of nodes, etc. Control circuitry may be adapted to control any of the methods described herein and/or to cause such methods to be performed, e.g. by the radio node. Corresponding instructions may be stored in the memory, which may be readable and/or readably connected to the control circuitry. Control circuitry may include a controller, which may comprise a microprocessor and/or microcontroller and/or FPGA (Field-Programmable Gate Array) device and/or ASIC (Application Specific Integrated Circuit) device. It may be considered that control circuitry comprises or may be connected or connectable to memory, which may be adapted to be accessible for reading and/or writing by the controller and/or control circuitry.

Radio circuitry may comprise receiving circuitry (e.g. one or more receivers) and/or transmitting circuitry (e.g. one or more transmitters). Alternatively or additionally, radio circuitry may comprise transceiving circuitry for transmitting and receiving (e.g. one or more transceivers). It may be considered that radio circuitry comprises a sensing arrangement for performing LBT/CCA.

Radio circuitry may generally comprise, for example, a receiver device and/or transmitter device and/or transceiver device.

Antenna circuitry may comprise one or more antennas or antenna elements, which may be arranged in an antenna array. It may be considered that antenna circuitry comprises one or more additional elements and/or is connected or connectable to one or more additional elements, e.g. wiring and/or

Configuring a radio node, in particular a user equipment, may refer to the radio node being adapted or caused or set to operate according to the configuration. Configuring may be done by another device, e.g. a network node (for example, a radio node of the network like a base station or eNodeB) or network, in which case it may comprise transmitting configuration data to the radio node to be configured. Such configuration data may represent the configuration to be configured and/or comprise one or more instruction pertaining to a configuration, e.g. regarding a freeze interval and/or a transmission start interval. A radio node may configure itself, e.g. based on configuration data received from a network or network node.

Generally, configuring may include determining configuration data representing the configuration and providing it to one or more other nodes (parallel and/or sequentially), which may transmit it further to the radio node (or another node, which may be repeated until it reaches the wireless device). Alternatively or additionally, configuring a radio node, e.g. by a network node or other device, may include receiving configuration data and/or data pertaining to configuration data, e.g. from another node like a network node, which may be a higher-level node of the network, and/or transmitting received configuration data to the radio node. Accordingly, determining a configuration and transmitting the configuration data to the radio node may be performed by different network nodes or entities, which may be able to communicate via a suitable interface, e.g. an X2 interface in the case of LTE.

A carrier may comprise a continuous or discontinuous radio frequency bandwidth and/or frequency distribution, and/or may carry, and/or be utilized or utilizable for transmitting, information and/or signals, in particular communication data. It may be considered that a carrier is defined by and/or referred to and/or indexed according to for example a standard like LTE. A carrier may comprise one or more subcarriers. A set of subcarriers (comprising at least one subcarrier) may be referred to as carrier, e.g. if a common LBT procedure (e.g. measuring the total energy/power for the set) is performed for the set. A channel may comprise at least one carrier. Accessing a carrier may comprise transmitting on the carrier. If accessing a carrier is allowed, this may indicate that transmission on this carrier is allowed.

A storage medium may generally be computer-readable and/or accessible and/or readable by control circuitry (e.g., after connecting it to a suitable device or interface), and may comprise e.g. an optical disc and/or magnetic memory and/or a volatile or non-volatile memory and/or flash memory and/or RAM and/or ROM and/or EPROM and/or EEPROM and/or buffer memory and/or cache memory and/or a database and/or an electrical or optical signal.

The terms "interval" and "period" may be used interchangeably throughout this disclosure.

A LAA node may be a radio node adapted for LAA.

In the context of this description, wireless communication may be communication, in particular transmission and/or reception of data, via electromagnetic waves and/or an air interface, in particular radio waves, e.g. in a wireless communication network and/or utilizing a radio access technology (RAT). The communication may involve one or more than one terminals connected to a wireless communication network and/or more than one node of a wireless communication network and/or in a wireless communication network. It may be envisioned that a node in or for communication, and/or in, of or for a wireless communication network is adapted for communication utilizing one or more RATs, in particular LTE/E-UTRA. A communication may generally involve transmitting and/or receiving messages, in particular in the form of packet data. A message or packet may comprise control and/or configuration data and/or payload data and/or represent and/or comprise a batch of physical layer transmissions. Control and/or configuration data may refer to data pertaining to the process of communication and/or nodes and/or terminals of the communication. It may, e.g., include address data referring to a node or terminal of the communication and/or data pertaining to the transmission mode and/or spectral configuration and/or frequency and/or coding and/or timing and/or bandwidth as data pertaining to the process of communication or transmission, e.g. in a header. Each node or terminal involved in communication may comprise radio circuitry and/or control circuitry and/or antenna circuitry, which may be arranged to utilize and/or implement one or more than one radio access technologies. Radio circuitry of a node or terminal may generally be adapted for the transmission and/or reception of radio waves, and in particular may comprise a corresponding transmitter and/or receiver and/or transceiver, which may be connected or connectable to antenna circuitry and/or control circuitry. Control circuitry of a node or terminal may comprise a controller and/or memory arranged to be accessible for the controller for read and/or write access. The controller may be arranged to control the communication and/or the radio circuitry and/or provide additional services. Circuitry of a node or terminal, in particular control circuitry, e.g. a controller, may be programmed to provide the functionality described herein. A corresponding program code may be stored in an associated memory and/or storage medium and/or be hardwired and/or provided as firmware and/or software and/or in hardware. A controller may generally comprise a processor and/or microprocessor and/or microcontroller and/or FPGA (Field-Programmable Gate Array) device and/or ASIC (Application Specific Integrated Circuit) device. More specifically, it may be considered that control circuitry comprises and/or may be connected or connectable to memory, which may be adapted to be accessible for reading and/or writing by the controller and/or control circuitry. Radio access technology may generally comprise, e.g., Bluetooth and/or Wifi and/or WIMAX and/or cdma2000 and/or GERAN and/or UTRAN and/or in particular E-Utran and/or LTE. A communication may in particular comprise a physical layer (PHY) transmission and/or reception, onto which logical channels and/or logical transmission and/or receptions may be imprinted or layered.

A node of a wireless communication network may be implemented as a radio node, in particular a terminal and/or user equipment or base station and/or relay node and/or any device generally adapted for communication in a wireless communication network, in particular cellular communication.

A cellular or wireless communication network may comprise a network node, in particular a radio network node or radio node. A network node may be connected or connectable to a core network, e.g. a core network with an evolved network core, e.g. according to LTE. A network node may e.g. be a base station or eNodeB. The connection between the network node and the core network/network core may be at least partly based on a cable/landline connection. Operation and/or communication and/or exchange of signals involving part of the core network, in particular layers above a base station or eNB, and/or via a predefined cell structure provided by a base station or eNB, may be considered to be of cellular nature or be called cellular operation. Operation and/or communication and/or exchange of signals without involvement of layers above a base station and/or without utilizing a predefined cell structure provided by a base station or eNB, may be considered to be D2D communication or operation, in particular, if it utilises the radio resources, in particular carriers and/or frequencies, and/or equipment (e.g. circuitry like radio circuitry and/or antenna circuitry, in particular transmitter and/or receiver and/or transceiver) provided and/or used for cellular operation.

A radio node like a terminal may be implemented as a mobile terminal and/or user equipment. A terminal or a user equipment (UE) may generally be a device configured for wireless device-to-device communication and/or a terminal for a wireless and/or cellular network, in particular a mobile terminal, for example a mobile phone, smart phone, tablet, PDA, etc. A user equipment or terminal may be a node of or for a wireless communication network as described herein, e.g. if it takes over some control and/or relay functionality for another terminal or node. It may be envisioned that terminal or a user equipment is adapted for one or more RATs, in particular LTE/E-UTRA. A terminal or user equipment may generally be proximity services (ProSe) enabled, which may mean it is D2D capable or enabled. It may be considered that a terminal or user equipment comprises radio circuitry and/control circuitry for wireless communication. Radio circuitry may comprise for example a receiver device and/or transmitter device and/or transceiver device. Control circuitry may include a controller, which may comprise a microprocessor and/or microcontroller and/or FPGA (Field-Programmable Gate Array) device and/or ASIC (Application Specific Integrated Circuit) device. It may be considered that control circuitry comprises or may be connected or connectable to memory, which may be adapted to be accessible for reading and/or writing by the controller and/or control circuitry. It may be considered that a terminal or user equipment is configured to be a terminal or user equipment adapted for LTE/E-UTRAN. Generally, a terminal may be adapted for MTC (machine-type communication). Such a terminal may be implemented as or associated to a sensor/sensor arrangement and/or smart device and/or lighting/lighting arrangement and/or remotely controlled and/or monitored device (e.g., smart-meter).

A network node may be a base station, which may be any kind of base station of a wireless and/or cellular network adapted to serve one or more terminals or user equipments. It may be considered that a base station is a node or network node of a wireless communication network. A network node or base station may be adapted to provide and/or define and/or to serve one or more cells of the network and/or to allocate frequency and/or time resources for communication to one or more nodes or terminals of a network. Generally, any node adapted to provide such functionality may be considered a base station. It may be considered that a base station or more generally a network node, in particular a radio network node, comprises radio circuitry and/or control circuitry for wireless communication. It may be envisioned that a base station or network node is adapted for one or more RATs, in particular LTE/E-UTRA.

A base station may be arranged to be a node of a wireless communication network, in particular configured for and/or to enable and/or to facilitate and/or to participate in cellular communication, e.g. as a device directly involved or as an auxiliary and/or coordinating node. Generally, a base station may be arranged to communicate with a core network and/or to provide services and/or control to one or more user equipments and/or to relay and/or transport communications and/or data between one or more user equipments and a core network and/or another base station and/or be Proximity Service enabled. An eNodeB (eNB) may be envisioned as an example of a base station, e.g. according to an LTE standard. A base station may generally be proximity service enabled and/or to provide corresponding services. It may be considered that a base station is configured as or connected or connectable to an Evolved Packet Core (EPC) and/or to provide and/or connect to corresponding functionality. The functionality and/or multiple different functions of a base station may be distributed over one or more different devices and/or physical locations and/or nodes. A base station may be considered to be a node of a wireless communication network. Generally, a base station may be considered to be configured to be a coordinating node and/or to allocate resources in particular for cellular communication between two nodes or terminals of a wireless communication network, in particular two user equipments.

It may be considered for cellular communication there is provided at least one uplink (UL) connection and/or channel and/or carrier and at least one downlink (DL) connection and/or channel and/or carrier, e.g. via and/or defining a cell, which may be provided by a network node, in particular a base station or eNodeB. An uplink direction may refer to a data transfer direction from a terminal to a network node, e.g. base station and/or relay station. A downlink direction may refer to a data transfer direction from a network node, e.g. base station and/or relay node, to a terminal. UL and DL may be associated to different frequency resources, e.g. carriers and/or spectral bands. A cell may comprise at least one uplink carrier and at least one downlink carrier, which may have different frequency bands. A network node, e.g. a base station or eNodeB, may be adapted to provide and/or define and/or control one or more cells, e.g. a PCell and/or a LA cell.

A network node, in particular a base station, and/or a terminal, in particular a UE, may be adapted for communication in spectral bands (frequency bands) licensed and/or defined for LTE. In addition, a network node, in particular a base station/eNB, and/or a terminal, in particular a UE, may be adapted for communication in freely available and/or unlicensed/LTE-unlicensed spectral bands (frequency bands), e.g. around 5GHz.

Configuring a terminal or wireless device or node may involve instructing and/or causing the wireless device or node to change its configuration, e.g. at least one setting and/or register entry and/or operational mode. A terminal or wireless device or node may be adapted to configure itself, e.g. according to information or data in a memory of the terminal or wireless device. Configuring a node or terminal or wireless device by another device or node or a network may refer to and/or comprise transmitting information and/or data and/or instructions to the wireless device or node by the other device or node or the network, e.g. allocation data (which may also be and/or comprise configuration data) and/or scheduling data and/or scheduling grants. Configuring a terminal may include sending allocation/configuration data to the terminal indicating which modulation and/or encoding to use. A terminal may be configured with and/or for scheduling data and/or to use, e.g. for transmission, scheduled and/or allocated uplink resources, and/or, e.g. for reception, scheduled and/or allocated downlink resources. Uplink resources and/or downlink resources may be scheduled and/or provided with allocation or configuration data.

A modulation of and/or modulating HARQ/ACK information/feedback may include an encoding and/or performing encoding. Allocation data configuring or indicating a modulation may include an indication which encoding to use for HARQ/ACK information/feedback. The term modulation may be used to refer to data (e.g. allocation data) representing and/or indicating the modulation used and/or to be used by a terminal.

A wireless communication network may comprise a radio access network (RAN), which may be adapted to perform according to one or more standards, in particular LTE, and/or radio access technologies (RAT).

A network device or node and/or a wireless device may be or comprise a software/program arrangement arranged to be executable by a hardware device, e.g. control circuitry, and/or storable in a memory, which may provide the described functionality and/or corresponding control functionality.

A cellular network or mobile or wireless communication network may comprise e.g. an LTE network (FDD or TDD), UTRA network, CDMA network, WiMAX, GSM network, any network employing any one or more radio access technologies (RATs) for cellular operation. The description herein is given for LTE, but it is not limited to the LTE RAT.

RAT (radio access technology) may generally include: e.g. LTE FDD, LTE TDD, GSM, CDMA, WCDMA, WiFi, WLAN, WiMAX, etc.

A storage medium may be adapted to store data and/or store instructions executable by control circuitry and/or a computing device, the instruction causing the control circuitry and/or computing device to carry out and/or control any one of the methods described herein when executed by the control circuitry and/or computing device. A storage medium may generally be computer-readable, e.g. an optical disc and/or magnetic memory and/or a volatile or non-volatile memory and/or flash memory and/or RAM and/or ROM and/or EPROM and/or EEPROM and/or buffer memory and/or cache memory and/or a database.

Resources or communication resources or radio resources may generally be frequency and/or time resources (which may be called time/frequency resources). Allocated or scheduled resources may comprise and/or refer to frequency-related information, in particular regarding one or more carriers and/or bandwidth and/or subcarriers and/or time-related information, in particular regarding frames and/or slots and/or subframes, and/or regarding resource blocks and/or time/frequency hopping information. Allocated resources may in particular refer to UL resources, e.g. UL resources for a first wireless device to transmit to and/or for a second wireless device. Transmitting on allocated resources and/or utilizing allocated resources may comprise transmitting data on the resources allocated, e.g. on the frequency and/or subcarrier and/or carrier and/or timeslots or subframes indicated. It may generally be considered that allocated resources may be released and/or de-allocated. A network or a node of a network, e.g. an allocation or network node, may be adapted to determine and/or transmit corresponding allocation data indicating release or de-allocation of resources to one or more wireless devices, in particular to a first wireless device.

Allocation or scheduling data may be considered to be data scheduling and/or indicating and/or granting resources allocated by the controlling or allocation node, in particular data identifying or indicating which resources are reserved or allocated for communication for a wireless device or terminal and/or which resources a wireless device or terminal may use for communication and/or data indicating a resource grant or release, in particular pertaining to uplink and/or downlink resources. A grant or resource or scheduling grant or scheduling data (which, in particular, may pertain to information regarding and/or representing and/or indicating scheduling of resources) may be considered to be one example of allocation data. Allocation data may in particular comprise information and/or instruction regarding a configuration and/or for configuring a terminal, e.g. indicating a measurement configuration to be used and/or pertaining to modulation and/or encoding and/or to other transmission and/or reception parameters. It may be considered that an allocation node or network node is adapted to transmit allocation data directly to a node or wireless device and/or indirectly, e.g. via a relay node and/or another node or base station.

Allocation data may comprise control data and/or be part of or form a message, in particular according to a pre-defined format, for example a DCI format, which may be defined in a standard, e.g. LTE. Allocation data may comprise configuration data, which may comprise instruction to configure and/or set a user equipment for a specific operation mode, in particular a measurement mode, e.g. in regards to the use of receiver and/or transmitter and/or transceiver and/or use of transmission (e.g. TM) and/or reception mode, and/or may comprise scheduling data, e.g. granting resources and/or indicating resources to be used for transmission and/or reception. A scheduling assignment may be considered to represent scheduling data and/or be seen as an example of allocation data. A scheduling assignment may in particular refer to and/or indicate resources to be used for communication or operation.

A wireless device may generally be a terminal, e.g. a user equipment.

A channel may generally be a physical channel, in particular a control channel, e.g. PUCCH. A control channel may be used for and/or carry control information, an uplink control channel for example uplink control information.

Data and/or information may generally be transmitted and/or received as signal/s, which may be carried on a time-frequency resource and/or carrier and/or subcarrier.

A cellular network or mobile or wireless communication network may comprise e.g. an LTE network (FDD or TDD), UTRA network, CDMA network, WiMAX, GSM network, any network employing any one or more radio access technologies (RATs) for cellular operation. The description herein is given for LTE, but it is not limited to the LTE RAT.

RAT (radio access technology) may generally include: e.g. LTE FDD, LTE TDD, GSM, CDMA, WCDMA, WiFi, WLAN, WiMAX, etc.

Each or any one of the radio nodes or user equipments shown in the figures may be adapted to perform the methods to be carried out by a radio node or user equipment described herein. Alternatively or additionally, each or any of the radio nodes or user equipments shown in the figures may comprise any one or any combination of the features of a user equipment described herein.

A cell may be generally a communication cell, e.g. of a cellular or mobile communication network, provided by a node. A serving cell may be a cell on or via which a network node (the node providing or associated to the cell, e.g. base station or eNodeB) transmits and/or may transmit data (which may be data other than broadcast data) to a user equipment, in particular control and/or user or payload data, and/or via or on which a user equipment transmits and/or may transmit data to the node; a serving cell may be a cell for or on which the user equipment is configured and/or to which it is synchronized and/or has performed an access procedure, e.g. a random access procedure, and/or in relation to which it is in a RRC_connected or RRC_idle state, e.g. in case the node and/or user equipment and/or network follow the LTE-standard. One or more carriers (e.g. uplink and/or downlink carrier/s and/or a carrier for both uplink and downlink) may be associated to a cell.

Data may refer to any kind of data, in particular any one of and/or any combination of control data or user data or payload data. Control data may refer to data controlling and/or scheduling and/or pertaining to the process of data transmission and/or the network or terminal operation.

In this description, for purposes of explanation and not limitation, specific details are set forth (such as particular network functions, processes and signaling steps) in order to provide a thorough understanding of the technique presented herein. It will be apparent to one skilled in the art that the present concepts and aspects may be practiced in other variants and variants that depart from these specific details.

For example, the concepts and variants are partially described in the context of Long Term Evolution (LTE) or LTE-Advanced (LTE-A) mobile or wireless communications technologies; however, this does not rule out the use of the present concepts and aspects in connection with additional or alternative mobile communication technologies such as the Global System for Mobile Communications (GSM). While the following variants will partially be described with respect to certain Technical Specifications (TSs) of the Third Generation Partnership Project (3GPP), it will be appreciated that the present concepts and aspects could also be realized in connection with different Performance Management (PM) specifications.

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP), a Field Programmable Gate Array (FPGA) or general purpose computer. It will also be appreciated that while the variants described herein are elucidated in the context of methods and devices, the concepts and aspects presented herein may also be embodied in a program product as well as in a system comprising control circuitry, e.g. a computer processor and a memory coupled to the processor, wherein the memory is encoded with one or more programs or program products that execute the services, functions and steps disclosed herein.

It is believed that the advantages of the aspects and variants presented herein will be fully understood from the foregoing description, and it will be apparent that various changes may be made in the form, constructions and arrangement of the exemplary aspects thereof without departing from the scope of the concepts and aspects described herein or without sacrificing all of its advantageous effects. Because the aspects presented herein can be varied in many ways, it will be recognized that any scope of protection should be defined by the scope of the claims that follow without being limited by the description.

Receiving or transmitting on a cell or carrier may refer to receiving or transmitting utilizing a frequency (band) or spectrum associated to the cell or carrier. A cell may generally comprise and/or be defined by or for one or more carriers, in particular at least one carrier for UL communication/transmission (called UL carrier) and at least one carrier for DL communication/transmission (called DL carrier). It may be considered that a cell comprises different numbers of UL carriers and DL carriers. Alternatively or additionally, a cell may comprise at least one carrier for UL communication/transmission and DL communication/transmission, e.g. in TDD-based approaches.

A channel may generally be a logical or physical channel. A channel may comprise and/or be arranged on one or more carriers, in particular a plurality of subcarriers.

A wireless communication network may comprise at least one network node, in particular a network node as described herein. A terminal connected or communicating with a network may be considered to be connected or communicating with at least one network node, in particular any one of the network nodes described herein.

A carrier on which a LBT procedure and/or CCA and/or monitoring is performed may be an unlicensed carrier.

| Abbreviation | Explanation |
|---|---|
| CCA | Clear Channel Assessment |
| CW | Contention Window |
| DCF | Distributed Coordination Function |
| DIFS | DCF Inter-Frame Spacing |
| DL | Downlink |
| DRS | Discovery Reference Signal |
| eNB | evolved NodeB, base station |
| TTI | Transmission-Time Interval |
| LAA | Licensed Assisted Access |
| LBT | Listen Before Talk |
| MRBC | Multiple Random Backoff Channels/Carriers |
| PDCCH | Physical Downlink Control Channel |
| PIFS | PCF Inter-Frame Spacing |
| PUSCH | Physical Uplink Shared Channel |
| QCI | QoS Class Identifier |
| QoS | Quality of Service |
| SCell | Secondary Cell |
| SRBC | Single Random Backoff Channel/Carrier |
| SIFS | Short Inter-Frame Spacing |
| UE | User Equipment |
| UL | Uplink |
| TDD Time | Division Duplexing |
| UL | Uplink; generally referring to transmission of data to a node/into a direction closer to a network core (physically and/or logically); in particular from a D2D device or UE to a base station or eNodeB; in the context of D2D, it may refer to the spectrum/bandwidth utilized for transmitting in D2D, which may be the same used for UL communication to a eNB in cellular communication; in some D2D variants, transmission by all devices involved in D2D communication may in some variants generally be in UL spectrum/bandwidth/carrier/frequency |
| TPC | Transmit Power Control |
| RE | Resource Element |
| RB | Resource Block |
| RAT | Radio Access Technology |
| DL | Downlink; generally referring to transmission of data to a node/into a direction further away from network core (physically and/or logically); in particular from a base station or eNodeB to a D2D device or UE; often uses specified spectrum/bandwidth different from UL (e.g. LTE) |
| eNB | evolved NodeB; a form of base station, also called eNodeB |
| E-UTRA/N | Evolved UMTS Terrestrial Radio Access/Network, an example of aRAT |
| OFDM | Orthogonal Frequency Division Multiplexing |
| AP | Access point |

## Claims

1. Radio node (10, 100) for a wireless communication network, the radio node (10, 100) being adapted for transmitting data, based on a Listen-Before-Talk, LBT, procedure, on a plurality of carriers, **characterized in that**, the data is transmitted on the plurality of carriers when and/or after reaching a wait time, wherein the wait time is determined based on one or more operational conditions and/or parameters, wherein the wait time indicates a point in time, up to which one or more carriers of the plurality of carriers with completed backoff procedure will wait, before transmission of the data.

2. Radio node according to claim 1, the radio node (10, 100) being adapted for multi-carrier operation and/or carrier aggregation, CA, pertaining to the plurality of carriers.

3. Radio node according to one of the preceding claims, the radio node (10, 100) being adapted for Licensed Assisted Access, LAA, with the plurality of carriers comprising a carrier of a Secondary Cell, SCell.

4. Radio node according to one of the preceding claims wherein performing a LBT procedure comprises determining the wait time and/or withholding transmitting until the wait time is reached.

5. Radio node according to one of the preceding claims, wherein the LBT procedure comprises performing a random backoff and/or is based on a random backoff number, wherein the wait time is determined to be later/after the time associated with performing the random backoff.

6. Radio node according to one of the preceding claims, wherein an operational parameter indicates a combination of a number of unlicensed carriers used, and/or traffic load, and/or Quality of Service class, and/or interference conditions.

7. Method for operating a radio node (10, 100) in a wireless communication network, the method comprising transmitting data, based on a Listen-Before-Talk, LBT, procedure, on a plurality of carriers, **characterized in that**, the data is transmitted on the plurality of carriers when and/or after reaching a wait time, wherein the wait time is determined based on one or more operational conditions and/or parameters, wherein the wait time indicates a point in time, up to which one or more carriers of the plurality of carriers with completed backoff procedure will wait, before transmission of the data.

8. Method according to claim 7, comprising multi-carrier operation and/or carrier aggregation, CA, pertaining to the plurality of carriers.

9. Method according to one of claims 7 to 8, wherein transmitting comprises performing Licensed Assisted Access, LAA, with the plurality of carriers comprising a carrier of a Secondary Cell, SCell.

10. Method according to one of claims 7 to 9, wherein the LBT procedure comprises determining the wait time and/or withholding transmitting until the wait time is reached.

11. Method according to one of claims 7 to 10, wherein the LBT procedure comprises performing a random backoff and/or is based on a random backoff number, wherein the wait time is determined to be later/after the time associated with performing the random backoff.

12. Method according to one of claims 7 to 11, wherein an operational parameter indicates a combination of a number of unlicensed carriers used, and/or traffic load, and/or Quality of Service class, and/or interference conditions.

13. Program product comprising instructions, the instructions causing control circuitry to perform a method according to one of claims 7 to 12.

14. Storage medium storing a program product according to claim 13 containing instructions causing control circuitry to perform method according to one of claims 7 to 12.

## Patentansprüche

1. Funkknoten (10, 100) für ein drahtloses Kommunikationsnetz, wobei der Funkknoten (10, 100) zum Übertragen von Daten, basierend auf einer Listen-Before-Talk-Prozedur, LBT-Prozedur, auf einer Vielzahl von Trägern angepasst ist, **dadurch gekennzeichnet, dass** die Daten auf der Vielzahl von Trägern übertragen werden, wenn und/oder nachdem eine Wartezeit erreicht ist, wobei die Wartezeit basierend auf einer oder mehreren Betriebsbedingungen und/oder Parametern bestimmt wird, wobei die Wartezeit einen Zeitpunkt angibt, bis zu dem ein oder mehrere Träger der Vielzahl von Trägern mit abgeschlossener Backoff-Prozedur warten werden, bevor die Daten übertragen werden.

2. Funkknoten nach Anspruch 1, wobei der Funkknoten (10, 100) für Mehrträgerbetrieb und/oder Trägeraggregation, CA, angepasst ist, in Bezug auf die Vielzahl von Trägern.

3. Funkknoten nach einem der vorhergehenden Ansprüche, wobei der Funkknoten (10, 100) für Licensed Assisted Access, LAA, angepasst ist, wobei die Vielzahl von Trägern einen Träger einer Sekundärzelle, SCell, umfasst.

4. Funkknoten nach einem der vorhergehenden Ansprüche, wobei das Durchführen einer LBT-Prozedur das Bestimmen der Wartezeit und/oder das Zurückhalten der Übertragung, bis die Wartezeit erreicht ist, umfasst.

5. Funkknoten nach einem der vorhergehenden Ansprüche, wobei die LBT-Prozedur das Durchführen eines zufälligen Backoffs umfasst und/oder auf einer zufälligen Backoff-Zahl basiert, wobei bestimmt wird, dass die Wartezeit später/nach der Zeit ist, die mit dem Durchführen des zufälligen Backoffs assoziiert ist.

6. Funkknoten nach einem der vorhergehenden Ansprüche, wobei ein Betriebsparameter eine Kombination aus einer Anzahl verwendeter unlizenzierter Träger und/oder Verkehrslast und/oder Dienstgüteklasse und/oder Interferenzbedingungen angibt.

7. Verfahren zum Betreiben eines Funkknotens (10, 100) in einem drahtlosen Kommunikationsnetz, wobei das Verfahren das Übertragen von Daten, basierend auf einer Listen-Before-Talk-Prozedur, LBT-Prozedur, auf einer Vielzahl von Trägern umfasst, **dadurch gekennzeichnet, dass** die Daten auf der Vielzahl von Trägern übertragen werden, wenn und/oder nachdem eine Wartezeit erreicht ist, wobei die Wartezeit basierend auf einer oder mehreren Betriebsbedingungen und/oder Parametern bestimmt wird, wobei die Wartezeit einen Zeitpunkt angibt, bis zu dem ein oder mehrere Träger der Vielzahl von Trägern mit abgeschlossener Backoff-Prozedur warten werden, bevor die Daten übertragen werden.

8. Verfahren nach Anspruch 7, das einen Mehrträgerbetrieb und/oder eine Trägeraggregation, CA, in Bezug auf die Vielzahl von Trägern umfasst.

9. Verfahren nach einem der Ansprüche 7 bis 8, wobei das Übertragen das Durchführen eines Licensed Assisted Access, LAA, umfasst, wobei die Vielzahl von Trägern einen Träger einer Sekundärzelle, SCell, umfasst.

10. Verfahren nach einem der Ansprüche 7 bis 9, wobei die LBT-Prozedur das Bestimmen der Wartezeit und/oder das Zurückhalten des Übertragens bis zum Erreichen der Wartezeit umfasst.

11. Verfahren nach einem der Ansprüche 7 bis 10, wobei die LBT-Prozedur das Durchführen eines zufälligen Backoffs umfasst und/oder auf einer zufälligen Backoff-Zahl basiert, wobei bestimmt wird, dass die Wartezeit später/nach der Zeit ist, die mit dem Durchführen des zufälligen Backoffs assoziiert ist.

12. Verfahren nach einem der Ansprüche 7 bis 11, wobei ein Betriebsparameter eine Kombination aus einer Anzahl verwendeter unlizenzierter Träger und/oder Verkehrslast und/oder Dienstgüteklasse und/oder Interferenzbedingungen angibt.

13. Programmprodukt, das Anweisungen umfasst, wobei die Anweisungen eine Steuerschaltung veranlassen, ein Verfahren nach einem der Ansprüche 7 bis 12 durchzuführen.

14. Speichermedium, das ein Programmprodukt nach Anspruch 13 speichert, das Anweisungen enthält, die eine Steuerschaltung veranlassen, ein Verfahren nach einem der Ansprüche 7 bis 12 durchzuführen.

## Revendications

1. Nœud de radio (10, 100) pour un réseau de communication sans fil, le nœud de radio (10, 100) étant adapté pour transmettre des données, sur la base d'une procédure d'écoute avant de parler, LBT, sur une pluralité de porteuses, **caractérisé en ce que,** les données sont transmises sur la pluralité de porteuses lorsque et/ou après avoir atteint un temps d'attente, dans lequel le temps d'attente est déterminé sur la base d'un(e) ou de plusieurs conditions et/ou paramètres opérationnels, dans lequel le temps d'attente indique un point dans le temps, jusqu'auquel une ou plusieurs porteuses de la pluralité de porteuses dont la procédure de délai d'attente est terminée attendront, avant la transmission des données.

2. Nœud de radio selon la revendication 1, le nœud de radio (10, 100) étant conçu pour un fonctionnement à multiples porteuses et/ou une agrégation de porteuses, CA, concernant la pluralité de porteuses.

3. Nœud de radio selon l'une des revendications précédentes, le nœud de radio (10, 100) étant adapté pour un accès assisté par licence, LAA, la pluralité de porteuses comprenant une porteuse d'une cellule secondaire, SCell.

4. Nœud de radio selon l'une des revendications précédentes dans lequel l'exécution d'une procédure LBT comprend la détermination du temps d'attente et/ou la retenue de la transmission jusqu'à ce que le temps d'attente soit atteint.

5. Nœud de radio selon l'une des revendications précédentes, dans lequel la procédure LBT comprend l'exécution d'un délai d'attente aléatoire et/ou est basée sur un nombre de délai d'attente aléatoire, dans lequel le temps d'attente est déterminé comme étant ultérieur/après le temps associé à l'exécution du délai d'attente aléatoire.

6. Nœud de radio selon l'une des revendications précédentes, dans lequel un paramètre opérationnel indique une combinaison d'un certain nombre de porteuses sans licence utilisées, et/ou d'une charge de trafic, et/ou de la qualité de la classe de service, et/ou de conditions d'interférence.

7. Procédé pour faire fonctionner un nœud de radio (10, 100) dans un réseau de communication sans fil, le procédé comprenant la transmission de données, sur la base d'une procédure d'écoute avant de parler, LBT, sur une pluralité de porteuses, **caractérisé en ce que,** les données sont transmises sur la pluralité de porteuses lorsque et/ou après avoir atteint un temps d'attente, dans lequel le temps d'attente est déterminé sur la base d'un(e) ou de plusieurs conditions et/ou paramètres opérationnels, dans lequel le temps d'attente indique un point dans le temps, jusqu'auquel une ou plusieurs porteuses de la pluralité de porteuses dont la procédure de délai d'attente est terminée attendront, avant la transmission des données.

8. Procédé selon la revendication 7, comprenant un fonctionnement à multiples porteuses et/ou une agrégation de porteuses, CA, relative à la pluralité de porteuses.

9. Procédé selon l'une des revendications 7 à 8, dans lequel la transmission comprend l'exécution d'un accès assisté par licence, LAA, la pluralité de porteuses comprenant une porteuse d'une cellule secondaire, SCell.

10. Procédé selon l'une des revendications 7 à 9, dans lequel la procédure LBT comprend la détermination du temps d'attente et/ou la retenue de la transmission jusqu'à ce que le temps d'attente soit atteint.

11. Procédé selon l'une des revendications 7 à 10, dans lequel la procédure LBT comprend l'exécution d'un délai d'attente aléatoire et/ou est basée sur un nombre de délai d'attente aléatoire, dans lequel le temps d'attente est déterminé comme étant ultérieur/après le temps associé à l'exécution du délai d'attente aléatoire.

12. Procédé selon l'une des revendications 7 à 11, dans lequel un paramètre opérationnel indique une combinaison d'un certain nombre de porteuses sans licence utilisées, et/ou d'une charge de trafic, et/ou de la qualité de la classe de service, et/ou de conditions d'interférence.

13. Produit de programme comprenant des instructions, les instructions amenant un circuit de commande à réaliser un procédé selon l'une des revendications 7 à 12.

14. Support de stockage stockant un produit de programme selon la revendication 13, contenant des instructions amenant un circuit de commande à exécuter un procédé selon l'une des revendications 7 à 12.
